# EUROPÄISCHE PATENTSCHRIFT

(11) **EP 4 033 360 B1**
(45) Veröffentlichungstag und Bekanntmachung des Hinweises auf die Patenterteilung: **01.03.2023**
(21) Anmeldenummer: 21153401.1
(22) Anmeldetag: 26.01.2021
(51) Int. Cl.: G06F 11/07, G06F 11/30, G06F 11/14, G06F 11/20

(54) **VERFAHREN ZUR STEUERUNG UND ZUM AUTOMATISCHEN WIEDERANLAUF EINER TECHNISCHEN VORRICHTUNG**
METHOD FOR CONTROLLING AND AUTOMATICALLY RESTARTING A TECHNICAL DEVICE
PROCÉDÉ DE COMMANDE ET DE REDÉMARRAGE AUTOMATIQUE D'UN DISPOSITIF TECHNIQUE

(43) Veröffentlichungstag der Anmeldung: 27.07.2022
(73) Patentinhaber: TTTech Auto AG, 1040 Wien (AT)
(72) Erfinder: Kopetz, Hermann, 2500 Baden (AT)
(74) Vertreter: Patentanwaltskanzlei Matschnig & Forsthuber OG

(56) Entgegenhaltungen:
- EP-A1- 3 176 696
- EP-A1- 3 376 330
- EP-A1- 3 557 356

## Beschreibung

Die Erfindung betrifft ein Verfahren zur Steuerung und zum automatischen Wiederanlauf einer technischen Vorrichtung, z.B. einer technischen Anlage, wie etwa einem Roboter oder einem Fahrzeug, insbesondere einem Kraftfahrzeug, mit einem verteilten Echtzeitcomputersystem, wobei das Echtzeitcomputersystem Subsysteme, insbesondere eine Vielzahl von Subsystemen, umfasst, wobei beispielsweise die Subsysteme hierarchisch angeordnet sind, und wobei die Subsysteme über eine globale Zeit synchronisiert sind, beispielsweise indem ein Zeitserver vorhanden ist, der vorzugsweise außerhalb der Hierarchie der Subsysteme steht, wobei der Zeitserver periodisch Synchronisationsnachrichten an jedes Subsystem, etwa an die Uhren jedes Subsystems, zur Synchronisation der Subsysteme bzw. der Uhren der Subsysteme zum Aufbau der globalen Zeit sendet, und wobei unter Verwendung dieser globalen Zeit die Zeitachse in eine Folge von synchronisierten Zeitscheiben unterteilt wird.

Weiters betrifft die Erfindung ein verteiltes Echtzeitcomputersystem, zur Steuerung einer technischen Vorrichtung, z.B. einer technischen Anlage, wie etwa einem Roboter oder einem Fahrzeug, insbesondere einem Kraftfahrzeug, wobei das Echtzeitcomputersystem Subsysteme, insbesondere eine Vielzahl von Subsystemen, umfasst, wobei beispielsweise die Subsysteme hierarchisch angeordnet sind, und wobei die Subsysteme über eine globale Zeit synchronisiert sind, beispielsweise indem ein Zeitserver vorhanden ist, der vorzugsweise außerhalb der Hierarchie der Subsysteme steht, wobei der Zeitserver dazu eingerichtet ist, periodisch Synchronisationsnachrichten an jedes Subsystem, etwa an die Uhren jedes Subsystems, zur Synchronisation der Subsysteme bzw. der Uhren der Subsysteme zum Aufbau der globalen Zeit zu senden, und wobei unter Verwendung dieser globalen Zeit die Zeitachse in eine Folge von synchronisierten Zeitscheiben unterteilt ist.

Die Erfindung liegt im Bereich der Computertechnik. Sie beschreibt ein Verfahren zum sicheren autonomen Betrieb und Wiederanlauf nach Auftreten eines transienten Fehlers einer technischen Vorrichtung, wie etwa einem Roboter oder einem Fahrzeug, insbesondere einem Kraftfahrzeug, und ein Echtzeitcomputersystem zur Steuerung einer solchen technischen Vorrichtung. In der Literatur wird ein System, das aus einer technischen Vorrichtung und einem die Vorrichtung steuernden Echtzeitcomputersystem besteht, auch als *Cyber-Physical System (CPS)* bezeichnet.

Der autonome Betrieb einer technischen Vorrichtung, z.B. einer technischen Anlage, wie etwa einem Roboter oder einem Fahrzeug, insbesondere einem Kraftfahrzeug, erfordert ein Echtzeitcomputersystem, das die Umwelt der technischen Vorrichtung, etwa der Anlage, mit Sensoren beobachtet, mittels eines auf dem Echtzeitcomputersystem laufenden Prozessmodells die Sensordaten auswertet und die errechneten Sollwerte den Aktoren übergibt, die den Ablauf der physikalischen Vorgänge beeinflussen. Die Beobachtung der Umwelt kann beispielsweise mit optischen Sensoren (Kamera), LIDAR, Radarsensoren sowie diversen anderen Sensoren erfolgen. Die Auswertung der Sensordaten, die Datenfusion der Sensordaten und die Erstellung von erforderlichen Umweltmodellen, sowie die Planung der Trajektorien, erfordern komplexe Softwarekomponenten mit Millionen von Befehlen.

In vielen Cyber-Physical Systemen, z.B. bei der autonomen Steuerung eines Fahrzeugs, kann ein auftretender Fehler im Echtzeitcomputersystem schwerwiegende Auswirkungen haben. Ein solcher Fehler kann durch einen transienten oder permanenten Ausfall der Hardware eines Subsystems oder durch einen Defekt in der Software (Entwurfsfehler) ausgelöst werden. In sicherheitskritischen Anwendungen wird gefordert, dass die Mean-Time to Fail (*MTTF*) eines katastrophalen Ausfalls auf Systemebene in der Größenordnung von 10⁸ bis 10⁹ Stunden betragen muss.

Ein Fehlverhalten des Systems kann aber auch durch eine *Intrusion* ausgelöst werden. Bei einer *Intrusion* (einem Einbruch in das System) umgeht ein *Intruder* (Einbrecher) die *Intrusion Detection Mechanismen* und übernimmt die volle Kontrolle über das System. Der Intruder kann dann einen byzantinischen Fehler des kompromittierten Subsystems produzieren. *"Als byzantinische Fehler bezeichnet man in der Informationstechnik Fehler, bei denen sich ein System beliebig falsch verhält"* [Wiklb]. Ein *byzantinischer Fehler* ist somit der bösartigste Fehler, der in einem System auftreten kann.

Die Architektur eines sicheres Echtzeitcomputersystem muss gewährleisten, dass jedmöglicher *byzantinische Fehler* in einem der komplexen Subsysteme des Echtzeitcomputersystems, gleichgültig ob er verusacht wurde durch ein zufälliges Versagen der Hardware, einem Entwurfsfehler in der Software oder eine Intrusion, erkannt und derart beherrscht wird, dass die technische Vorrichtung in einen sicheren Zustand geführt wird.

Der sichere Zustand kann statisch sein, d.h. der Betrieb der technischen Vorrichtung wird angehalten, oder dynamisch sein, d.h. die technische Vorrichtung wird in einen sicheren Betriebsbereich geführt.

Im Folgenden wird zwischen einer transienten und einer permanenten Fehlerursache unterschieden.

Eine transiente Fehlerursache liegt vor, wenn die Fehlerursache vorübergehend ist, die zu keiner andauernden Beschädigung von Computerhardware, insbesondere der Echtzeitcomputersystems, oder der technischen Vorrichtung geführt hat. Ein Beispiel für einen transienten Fehler ist ein durch die natürliche Höhenstrahlung ausgelöster *Single Event Upset (SEU)* [Con02], der zu einem einmaligen *Bit flip* im Speicher eines Computers geführt hat, aber die zukünftige physikalische Funktion des Speichers nicht weiter beeinträchtigt.

Eine permante Fehlerursache liegt vor, wenn die Fehlerursache bleibend ist und zu einer andauernden Beschädigung der Computerhardware oder der technischen Vorrichtung geführt hat. Ein Beispiel für einen permanenten Fehler ist der Bruch einer elektrischen Leitung.

Da die Hardware der technischen Anlage und der Computer auch nach Auftreten eines transienten Fehler funktionstüchtig bleibt, ist es prinzipell möglich, den normalen Betrieb der Vorrichtung wieder aufzunehmen, sobald die durch die Fehlerursache beschädigten Datenstrukturen repariert wurden.

Dokumente EP3557356 und EP3376330 offenbaren Verfahren zur Steuerung eines kontrollierten Objekts, wie z.B. eines Fahrzeugs, das in einer sich veränderten Umgebung eingebettet ist, wobei ein die Steuerung durchführendes elektronisches System, Sensoren, Aktuatoren und Knotenrechner umfasst, welche über ein Echtzeitkommunikationssystem Daten austauschen.

Dokument EP3176696 offenbart ein Verfahren zur Realisierung einer Echtzeitcomputeranwendung auf einem verteilten Echtzeitcomputersystem, welches eine Vielzahl von Sensoren, Aktuatoren, Knotenrechner und Verteilereinheiten umfasst, und wobei die Sensoren, Aktuatoren, Knotenrechner und Verteilereinheiten Zugriff auf eine globale Zeit haben.

Es ist eine Aufgabe der vorliegenden Erfindung, ein Verfahren und ein Echtzeitcomputersystem offen zu legen, welches den normalen Betrieb der technischen Anlage nach Auftreten eines transienten Fehlers automatisch wieder herstellt.

Diese Aufgabe wird mit einem eingangs genannten Verfahren dadurch gelöst, dass erfindungsgemäß
jedes Subsystem, und falls ein Zeitserver vorhanden ist, auch der Zeitserver, jeweils eine eigene Fault-Containment Unit bilden, und wobei
eines der Subsysteme ein Entscheidungssubsystem, das sogenannte *Fault-Tolerant Decision Subsystem,* FTDSS, ist, welches vorzugsweise in der höchsten Ebene der Hierarchie platziert ist, wobei das FTDSS dazu eingerichtet ist, mittels Nachrichten in jeder Zeitscheibe Sollwerte an Aktuatoren zu übergeben, wobei das *Fault-Tolerant Decision Subsystem,* FTDSS, ein sicheres Subsystem ist, d.h. einfache Software enthält, die auf einer fehlertoleranten Hardware ausgeführt wird, und wobei
mindestens oder genau drei *Datenverarbeitungssubsysteme,* ein *Normal-Processing Subsystem, NPSS,* ein *Monitor Subsystem, MSS,* und ein *Critical Event Handling Subsystem, CEHSS,* vorgesehen sind, welche vorzugsweise auf der nächst niedrigeren Hierarchieebene platziert sind, wobei diese zumindest oder genau drei Datenverarbeitungssubsysteme dazu eingerichtet sind, mit Sensoren Sensordaten einer Umgebung, die mit den Sensoren beobachtet wird, zu erfassen und diese Sensordaten unabhängig voneinander auszuwerten, wobei
die Umgebung jeweils am Beginn einer Zeitscheibe von den Datenverarbeitungssubsystemen beobachtet wird und während dieser Zeitscheibe Berechnungen mit den durch die zu Beginn der Zeitscheibe durchgeführten Beobachtungen der Umgebung gewonnenen Sensordaten durchgeführt werden, und wobei
   i. das *Normal-Processing Subsystem, NPSS,* in jeder Zeitscheibe, vorzugsweise am Ende der Zeitscheibe, einen Satz von Sollwerten für einen *normalen Betrieb* in einer Nachricht an das *Fault-Tolerant Decision Subsystem,* FTDSS, und in einer Nachricht an das Monitor Subsystem, MSS, sendet, und wobei
   ii. das *Critical Event Handling Subsystem, CEHSS,* in jeder Zeitscheibe, vorzugsweise am Ende der Zeitscheibe, einen Satz von Sollwerten für einen *anormalen Betrieb* in einer Nachricht an das *Fault-Tolerant Decision Subsystem,* FTDSS, sendet, und wobei das CEHSS in dieser Nachricht dem FTDSS auch mitteilt, ob sich die technische Vorrichtung in einem sicheren Zustand befindet, und wobei
   iii. das *Fault-Tolerant Decision Subsystem,* FTDSS, in jeder Zeitscheibe den empfangenen Satz von Sollwerten für den normalen Betrieb, vorzugsweise am Ende der Zeitscheibe, in einer Nachricht an das *Monitor Subsystem, MSS,* sendet, und wobei vorzugsweise das *Fault-Tolerant Decision Subsystem,* FTDSS, weiters in jeder Zeitscheibe den empfangenen Satz von Sollwerten für den anormalen Betrieb, vorzugsweise am Ende der Zeitscheibe, in einer Nachricht an das *Monitor Subsystem, MSS,* sendet, und wobei
   iv. das Monitor Subsystem, MSS, in jeder Zeitscheibe eine Überprüfung durchführt, ob der Satz von Sollwerten für den normalen Betrieb, den es vom *Normal-Processing Subsystem, NPSS,* in der Nachricht erhalten hat, mit einem Umweltmodell, das vom MSS auf der Basis der Sensordaten des MSS errechnet wurde, vereinbar ist und eine sichere Führung der technischen Vorrichtung unter normalen Bedingungen gewährleistet und weiters das Monitor Subsystem, MSS, in jeder Zeitscheibe eine Überprüfung durchführt, ob der Satz von Sollwerten für den normalen Betrieb, den es vom *Normal-Processing Subsystem, NPSS,* in der Nachricht erhalten hat, identisch ist mit dem entsprechenden Satz von Sollwerten, die vom *Normal-Processing Subsystem, NPSS,* über das *Fault-Tolerant Decision Subsystem,* FTDSS, an das Monitor Subsystem, MSS, gesendet wurden, und
      falls beide Überprüfungen positiv sind, einen Korrektheitsindikator, Korrektheitsindikator-1, auf den Wert TRUE setzt und, falls eine der beiden Überprüfungen negativ ist oder beide Überprüfungen negativ sind, den Korrektheitsindikator-1 auf den Wert FALSE setzt und den Korrektheitsindikator-1 bzw. den Wert des Korrektheitsindikator-1 in jeder Zeitscheibe in einer Nachricht an das *Fault-Tolerant Decision Subsystem,* FTDSS, sendet, und wobei
      das *Fault-Tolerant Decision Subsystem,* FTDSS, in jeder Zeitscheibe wie folgt entscheidet: im Falle, dass der Korrektheitsindikator-1 den Wert TRUE aufweist, wird der Satz von Sollwerten für den normalen Betrieb, etwa in Nachrichten, an die Aktuatoren übergeben, im Falle, dass der Korrektheitsindikator-1 den Wert FALSE aufweist oder eine von dem FTDSS erwartete Nachricht mit dem Korrektheitsindikator-1 ausbleibt, wird der Satz von Sollwerten für den anormalen Betrieb, etwa in Nachrichten, an die Aktuatoren weitergeleitet, wobei in diesem Fall ab diesem Zeitpunkt in den folgenden Zeitscheiben die Sollwerte für den anormalen Betrieb an die Aktuatoren weitergeleitet werden,
      bis die technische Vorrichtung einen sicheren Zustand erreicht hat, der vom CEHSS, vorzugsweise in der Nachricht, dem FTDSS mitgeteilt wird, und wobei
das *Fault-Tolerant Decision Subsystem,* FTDSS, in jeder Zeitscheibe die an die Aktuatoren weitergeleiteten Sollwerte in Nachrichten an das NPSS und an das MSS sendet, und wobei
im Falle, dass das NPSS und/oder das MSS aufgrund der Überprüfung der in den Nachrichten enthaltenen Sollwerte feststellen, dass das FTDSS die Sollwerte für den anormalen Betrieb an die Aktuatoren weitergeleitet hat, ein Wiederanlauf des MSS und des NPSS ausgelöst wird,
wobei der Wiederanlauf abgeschlossen ist, sobald
   - das FTDSS auf Basis des Inhalts der Nachricht des CEHSS, in welcher das CEHSS mitteilt, ob sich die technische Vorrichtung in einem sicheren Zustand befindet, feststellt, dass sich die Anlage in einem sicheren Zustand befindet, und
   - das FTDSS vom *NPSS* in einer Zeitscheibe einen Satz von Sollwerten für den *normalen Betrieb,* etwa in einer Nachricht, empfängt, und
   - das FTDSS vom MSS in dieser Zeitscheibe, etwa mit einer Nachricht, den Korrektheitsindikator-1 mit dem Wert TRUE empfängt,
und wobei nach dem Abschluss des Wiederanlaufs das FTDSS wieder die vom NPSS erhaltenen Sollwerte für den normalen Betrieb an die Aktuatoren übergibt, sodass die Schritte i. - iv. wieder durchgeführt werden können bzw. durchgeführt werden,
und wobei der Wiederanlauf der beiden Datenverarbeitungssubsysteme, nämlich des NPSS und des MSS, jeweils die folgenden Schritte umfasst:
   a) Reset der Hardware des Datenverarbeitungssubsystems,
   b) Ausführung einer Testsoftware zur zur Feststellung der Integrität des Datenverarbeitungssubsystems,
   c) Neuinitialisierung und Neustart der Software des Datenverarbeitungssubsystems,
   d) Durchführung von Berechnungen mit den durch am Beginn einer Zeitscheibe durchgeführten Beobachtungen der Umgebung gewonnenen Sensordaten.
Weiters wird diese Aufgabe mit einem eingangs genannten Echtzeitcomputersystem gelöst, wobei erfindungsgemäß
jedes Subsystem, und falls ein Zeitserver vorhanden ist, auch der Zeitserver, jeweils eine eigene Fault-Containment Unit bilden, und wobei
eines der Subsysteme ein Entscheidungssubsystem, das sogenannte *Fault-Tolerant Decision Subsystem,* FTDSS, ist, welches vorzugsweise in der höchsten Ebene der Hierarchie platziert ist, wobei das FTDSS dazu eingerichtet ist, mittels Nachrichten in jeder Zeitscheibe Sollwerte an Aktuatoren zu übergeben, wobei das *Fault-Tolerant Decision Subsystem,* FTDSS, ein sicheres Subsystem ist, d.h. einfache Software enthält, die auf einer fehlertoleranten Hardware ausgeführt wird, und wobei
mindestens oder genau drei *Datenverarbeitungssubsysteme,* ein *Normal-Processing Subsystem, NPSS,* ein *Monitor Subsystem, MSS,* und ein *Critical Event Handling Subsystem, CEHSS,* vorgesehen sind, welche vorzugsweise auf der nächst niedrigeren Hierarchieebene platziert sind, wobei diese zumindest oder genau drei Datenverarbeitungssubsysteme dazu eingerichtet sind, mit Sensoren Sensordaten einer Umgebung, die mit den Sensoren beobachtet wird, zu erfassen und diese Sensordaten unabhängig voneinander auszuwerten, wobei
die Umgebung jeweils am Beginn einer Zeitscheibe von den Datenverarbeitungssubsystemen beobachtet wird und während dieser Zeitscheibe Berechnungen mit den durch die zu Beginn der Zeitscheibe durchgeführten Beobachtungen der Umgebung gewonnenen Sensordaten durchgeführt werden,
   i. das *Normal-Processing Subsystem, NPSS,* dazu eingerichtet ist, in jeder Zeitscheibe, vorzugsweise am Ende der Zeitscheibe, einen Satz von Sollwerten für einen *normalen Betrieb* in einer Nachricht an das *Fault-Tolerant Decision Subsystem,* FTDSS, und in einer Nachricht an das Monitor Subsystem, MSS, zu senden, und wobei
   ii. das *Critical Event Handling Subsystem, CEHSS,* dazu eingerichtet ist, in jeder Zeitscheibe, vorzugsweise am Ende der Zeitscheibe, einen Satz von Sollwerten für einen *anormalen Betrieb* in einer Nachricht an das *Fault-Tolerant Decision Subsystem,* FTDSS, zu senden, und das CEHSS dazu eingerichtet ist, vorzugsweise in dieser Nachricht, dem FTDSS mitzuteilen, ob sich die technische Vorrichtung in einem sicheren Zustand befindet, und wobei
   iii. das *Fault-Tolerant Decision Subsystem,* FTDSS, dazu eingerichtet ist, den empfangene Satz von Sollwerten für den normalen Betrieb in jeder Zeitscheibe in einer Nachricht an das *Monitor Subsystem, MSS,* zu senden, und wobei vorzugsweise das *Fault-Tolerant Decision Subsystem,* FTDSS, dazu eingerichtet ist, weiters in jeder Zeitscheibe den empfangenen Satz von Sollwerten für den anormalen Betrieb, vorzugsweise am Ende der Zeitscheibe, in einer Nachricht an das *Monitor Subsystem, MSS,* zu senden, und wobei
   iv. das Monitor Subsystem, MSS, dazu eingerichtet ist, in jeder Zeitscheibe eine Überprüfung durchzuführen, ob der Satz von Sollwerten für den normalen Betrieb, den es vom *Normal-Processing Subsystem, NPSS,* in der Nachricht erhalten hat, mit einem Umweltmodell, das vom MSS auf der Basis der Sensordaten des MSS errechnet wurde, vereinbar ist und eine sichere Führung der technischen Vorrichtung unter normalen Bedingungen gewährleistet und weiters das Monitor Subsystem, MSS, dazu eingerichtet ist, in jeder Zeitscheibe eine Überprüfung durchzuführen, ob der Satz von Sollwerten für den normalen Betrieb, den es vom *Normal-Processing Subsystem, NPSS,* in der Nachricht erhalten hat bzw. erhält, identisch ist mit dem entsprechenden Satz von Sollwerten, die vom *Normal-Processing Subsystem, NPSS,* über das *Fault-Tolerant Decision Subsystem,* FTDSS, an das Monitor Subsystem, MSS, gesendet wurden, und
      falls beide Überprüfungen positiv sind, einen Korrektheitsindikator, Korrektheitsindikator-1, auf den Wert TRUE zu setzen und, falls eine der beiden Überprüfungen negativ ist oder beide Überprüfungen negativ sind, den Korrektheitsindikator-1 auf den Wert FALSE zu setzen und den Korrektheitsindikator-1 bzw. den Wert des Korrektheitsindikator-1 in jeder Zeitscheibe in einer Nachricht an das *Fault-Tolerant Decision Subsystem,* FTDSS, zu senden, und wobei
      das *Fault-Tolerant Decision Subsystem,* FTDSS, in jeder Zeitscheibe wie folgt entscheidet: im Falle, dass der Korrektheitsindikator-1 den Wert TRUE aufweist, wird der Satz von Sollwerten für den normalen Betrieb, etwa in Nachrichten, an die Aktuatoren übergeben, im Falle, dass der Korrektheitsindikator-1 den Wert FALSE aufweist oder eine von dem FTDSS erwartete Nachricht mit dem Korrektheitsindikator-1 ausbleibt, wird der Satz von Sollwerten für den anormalen Betrieb, etwa in Nachrichten, an die Aktuatoren weitergeleitet, wobei in diesem Fall ab diesem Zeitpunkt in den folgenden Zeitscheiben die Sollwerte für den anormalen Betrieb an die Aktuatoren weitergeleitet werden, bis die technische Vorrichtung einen sicheren Zustand erreicht, der vom CEHSS, vorzugsweise in einer Nachricht, dem FTDSS mitgeteilt wird, und wobei
das *Fault-Tolerant Decision Subsystem,* FTDSS, dazu eingerichtet ist, in jeder Zeitscheibe die an die Aktuatoren weitergeleiteten Sollwerte in Nachrichten an das NPSS und an das MSS zu senden, und wobei
im Falle, dass das NPSS und/oder das MSS aufgrund der Überprüfung der in den Nachrichten enthaltenen Sollwerte feststellen, dass das FTDSS die Sollwerte für den anormalen Betrieb an die Aktuatoren weitergeleitet hat, ein Wiederanlauf des MSS und des NPSS ausgelöst wird, wobei vorzugsweise sowohl das NPSS als auch das MSS dazu eingerichtet sind, jeweils ihren eigenen Wiederanlauf auszulösen,
wobei der Wiederanlauf abgeschlossen ist, sobald
   - das FTDSS auf Basis des Inhalts der Nachricht des CEHSS, in welcher das CEHSS mitteilt, ob sich die technische Vorrichtung in einem sicheren Zustand befindet, feststellt, dass sich die Anlage in einem sicheren Zustand befindet, und
   - das FTDSS vom *NPSS* in einer Zeitscheibe einen Satz von Sollwerten für den *normalen Betrieb,* etwa in einer Nachricht, empfängt, und
   - das FTDSS vom MSS in dieser Zeitscheibe, etwa mit einer Nachricht, den Korrektheitsindikator-1 mit dem Wert TRUE empfängt,
und wobei nach dem Abschluss des Wiederanlaufs das FTDSS wieder die vom NPSS erhaltenen Sollwerte für den normalen Betrieb an die Aktuatoren übergibt, sodass die Schritte i. - iv. wieder durchgeführt werden können bzw. durchgeführt werden,
und wobei der Wiederanlauf der beiden Datenverarbeitungssubsysteme, nämlich des NPSS und des MSS, jeweils die folgenden Schritte umfasst:
   a) Reset der Hardware des Datenverarbeitungssubsystems,
   b) Ausführung einer Testsoftware zur zur Feststellung der Integrität des Datenverarbeitungssubsystems,
   c) Neuinitialisierung und Neustart der Software des Datenverarbeitungssubsystems,
   d) Durchführung von Berechnungen mit den durch am Beginn einer Zeitscheibe durchgeführten Beobachtungen der Umgebung gewonnenen Sensordaten.

Der ISO Standard ISO 26262 über funktionale Sicherheit zur Entwicklung, Prüfung und Zertifizierung von Software in sicherheitsrelevanten Anwendungen der Automobilindustrie führt vier ASIL (*Automotive Safety Integrity Levels*) Sicherheitsstufen ein, ASIL A (geringste Sicherheitsstufe), ASIL B, ASIL C und ASIL D (höchste Sicherheitsstufe). ASIL D beschreibt einen sehr aufwendigen Softwareentwicklungsprozess der zu einer fehlerfreien Software führen soll. Die Erfahrungen der NASA haben gezeigt [Dvo09], dass es praktisch nicht möglich ist, alle in einem komplexen Softwaresystem, das ist ein System mit mehr als 10000 Befehlen, vorhandenen Entwurfsfehler zu eliminieren.

Wir bezeichnen deshalb ein Softwaresystem bzw. eine Software, das/die weniger als 10000 Befehle umfasst und nach ASIL D entwickelt wurde, um alle Entwurfsfehler zu eliminieren, als *einfaches Softwaresystem*/*einfache Software.* Es wird angenommen, dass ein nach ASIL D entwickeltes einfaches Softwaresystem/einfache Software frei von Entwurfsfehlern ist.

Wenn ein Softwaresystem bzw. eine Software kein einfaches Softwaresystem bzw. keine einfache Software ist, so bezeichnen wir es als ein *komplexes Softwaresystem bzw. als komplexe Software.* Ein komplexes Softwaresystem bzw. eine komplexe Software kann nicht erkannte Entwurfsfehler, z.B. auch byzantinische Fehler wie sie durch eine Intrusion ausgelöst werden, enthalten.

Erfindungsgemäß besteht das hier geoffenbarte Echtzeitcomputersystem aus mindestens vier weitgehend unabhängigen Subsystemen, die vorzugsweise hierarchisch angeordnet sind, und deren Entwurf diversitär ist, so dass die Subsysteme weitgehend unabhängig voneinander ausfallen und sich wechselseitig überprüfen können.

Der Begriff "weitgehend unabhängig" soll zum Ausdruck bringen, dass eine volle Unabhängigkeit den Ausschluss von *allen* Einflussfaktoren, die auf die Subsysteme gleichzeitig einwirken könnten, wie etwa Temperatur, Höhenstrahlung, die SEU (single event upsets) auslösen kann, Verzögerung bei einem Unfall, Stromversorgung etc., erfordern würde. Da die Realisierung von *total unabhängigen* Subsystemen technisch nicht möglich ist, wird der Begriff *weitgehend unabhängig* eingeführt.

Zwei redundante Softwaresysteme sind *diversitär,* wenn die gegebene Aufgabenstellung von unabhängigen Entwicklungsteams, mit unterschiedlichen Entwicklungswerkzeugen unter dem Einsatz von unterschiedlichen Algorithmen gelöst wird. Diversitäre Software minimiert die Wahrscheinlichkeit, dass in zwei redundanten Softwaresystemen ein Softwarefehler in beiden Systemen gleichzeitig auftritt [Avi85].

Wir bezeichnen zwei redundante Subsysteme als diversitär, wenn zumindest die in den Subsystemenen zum Einsatz kommende Software diversitär ist. Ein höheres Mass an Diversität wird realisiert, wenn auch die eingesetzte Hardware unterschiedlich ist.

Weiters ist in der Architektur ein fünftes Subsystem, ein Zeitserver, vorhanden, das vorzugsweise außerhalb der Hierarchie steht, das periodisch Zeitsignale an die anderen Subsysteme sendet, um die Uhren der Subsysteme zu synchronisieren und eine globale Zeit aufrecht zu erhalten. Unter Verwendung dieser globalen Zeit wird die Zeitachse in eine Folge von synchronisierten Zeitscheiben unterteilt. Normalerweise wird am Beginn einer Zeitscheibe von einem Subsystem mit den vorhandenen Sensoren die Umgebung beobachtet. Während einer Zeitscheibe werden die vorgesehenen Berechnungen durchgeführt. Am Ende einer Zeitscheibe werden die Resultate der Berechnungen den anderen Subsystemen mittels Nachrichten zur Verfügung gestellt.

Jedes Subsystem bildet eine unabhängige Fault-Containment Unit (FCU), [Kop12, p.136-138]. Ein Subsystem ist eine FCU, wenn die unmittelbaren Folgen aller internen Fehlerursachen abkapselt sind und an der Oberfläche ein definiertes Fehlverhalten der Ausgabenachrichten gegeben ist. Durch die Abkapselung wird erreicht, dass zwei FCUs weitestgehend unabhängig voneinander ausfallen.

Es ist ein Entscheidungssubsystem (*Fault-Tolerant Decision Subsystem-FTDSS*) vorgesehen, welches sich vorzugsweise an der obersten Stelle der Hierarchie befindet. Das FTDSS beinhaltet eine einfache Software, die auf fehlertoleranter Hardware ausgeführt wird. Eine fehlertolerante Hardware, wie sie in [Kop12, p.155-157] beschrieben ist, maskiert einen in der Hardware auftretenden Fehler.

Vorzugsweise ist vorgesehen, um eine Intrusion in das FTDSS über das Internet zu verhindern, dass die FTDSS über keinen Zugang zum Internet technischen Vorrichtung. Da im FTDSS eine einfache Software auf einer fehlertoleranten Hardware ausgeführt wird, und wenn kein Zugang zum Internet verfügbar ist, kann angenommen werden, dass das FTDSS ein sicheres Subsystem ist, das korrekt funktioniert und eine geforderte Zuverlässigkeit von weniger als 10⁻⁸ Ausfällen/Stunde erreicht. Der Nachweis einer so hohen Zuverlässigkeit erfordert eine rigorose Systementwicklung nach ASIL D mit der Unterstützung durch formale Methoden und wäre praktisch kaum durchführbar, wenn ein Softwaresystem komplex ist.

Weiters sind drei Subsysteme vorgesehen, welche sich vorzugsweise auf der nächsten Ebene der Hierarchie befinden:
- Ein Subsystem, das die technische Anlage, z.B. ein Fahrzeug, im *normalen Betrieb* steuert -das *Normal Processing Subsystem NPSS.* Der *normale Betrieb* liegt vor, wenn alle im Systementwurf des NPSS gemachten Annahmen über die Funktion des Echtzeitcomputersystems und dessen Umgebung erfüllt sind, d.i. die Mechanik der technischen Vorrichtung und das Umfeld, in dem sich die technische Vorrichtung befindet. Eine Verletzung einer dieser Annahmen bezeichnen wir als *kritisches Ereignis.* Ein kritisches Ereignis, das vom NPSS nicht beherrscht wird, führt zu einem *anormalen Betrieb.*
- Ein Subsystem, das im *anormalen Betrieb,* d.i. nach Auftreten eines Ereignisses, das vom NPSS nicht beherrscht wird, die Kontrolle über den Prozess (z.B. das Fahrzeug) übernimmt und den Prozess (das Fahrzeug) in einen sicheren Zustand führt - das sogenannte *Critical Event Handling Subsystem CEHSS,* und
- Ein *Monitor Subsystem,* d.i. ein Subsystem, das die Funktion des NPSS und CEHSS überwacht.

Jedes dieser drei Subsysteme ist abgekapselt und autonom und wertet die Sensordaten mit diversitärer Software aus. Da jedes dieser drei Subsysteme bzw. die Software, die auf diesen Subsystemen ausgeführt wird, weit mehr als 10 000 Befehle umfasst, sind diese drei Subsysteme *komplex.* Es wird angenommen, dass ein komplexes Softwaresystem nach ASIL B entwickelt und validiert wird und im Betrieb die mittlere Zeit (MTTF) bis zum Auftreten eines Fehlers bei 10⁻⁴ Stunden liegt.

Von der beschriebenen Architektur kann der schlimmste Fall, nämlich dass zu einem beliebigen Zeitpunkt ein byzantinischer Fehler in einem der komplexen Subsysteme auftritt, beherrscht werden. Ein solcher byzantinische Fehler - gleichgültig ob die Fehlerursache ein Hardwarefehler, ein Softwarefehler oder eine Intrusion ist - wird von der vorgeschlagenen Architektur erkannt und beherrscht, insbesondere da die komplexen Subsysteme Fault-Containment Units bilden.

Vorteilhafte Ausgestaltungen des erfindungsgemäßen Verfahrens und des erfindungsgemäßen Echtzeitcomputersystems sind in den abhängigen Ansprüchen angegeben. Insbesondere können die folgenden Merkmale, jedes für sich alleine oder in beliebiger Kombination bei dem erfindungsgemäßen Verfahrens und/oder bei erfindungsgemäßen Echtzeitcomputersystems realisiert sein:
- Das NPSS und/oder das MSS und/oder das CEHSS, vorzugsweise alle drei dieser Datenverarbeitungssubsysteme, verfügen jeweils über einen Watchdog, wobei der Watchdog dazu eingerichtet ist, den Wiederanlauf des jeweiligen Datenverareitungssubsystems auszulösen. Ein Watchdog ist beispielsweise beschrieben in US 5,513,319.
- Das *Fault-Tolerant Decision Subsystem,* FTDSS, ist dazu eingerichtet, in jeder Zeitscheibe den empfangenen Satz von Sollwerten für den anormalen Betrieb, vorzugsweise am Ende der Zeitscheibe, in einer Nachricht an das *Monitor Subsystem, MSS,* zu senden, und das Monitor Subsystem, MSS, überprüft in jeder Zeitscheibe, ob der Satz von Sollwerten für den anormalen Betrieb, welchen es vom *Critical Event Handling Subsystem, CEHSS,* über das FTDSS, insbesondere mittels Nachrichten, erhält, mit dem Umweltmodell, das auf der Basis der Sensordaten des MSS vom MSS errechnet wurde, vereinbar ist und eine sichere Führung der technischen Vorrichtung im anomalen Betrieb gewährleistet, und falls dies der Fall ist, einen weiteren Korrektheitsindikator, den Korrektheitsindikator-2, auf den Wert TRUE setzt, und falls dies nicht der Fall ist oder wenn in einer Zeitscheibe kein Satz von Sollwerten für den anormalen Betrieb vom CEHSS empfangen wurde, den Korrektheitsindikator-2 auf den Wert FALSE setzt, und wobei das Monitor Subsystem, MSS, den Korrektheitsindikator-2 anschließend an das *Normal-Processing Subsystem, NPSS,* sendet, und wobei das *Normal-Processing Subsystem, NPSS,* in jeder Zeitscheibe überprüft, ob der vom Monitor Subsystem, MSS, erhaltene Korrektheitsindikator-2 den Wert FALSE einnimmt, und falls dies der Fall ist, die normale Führung der technischen Vorrichtung abbricht und die technische Vorrichtung in einen sicheren Zustand führt.

- Das *Normal-Processing Subsystem, NPSS,* übermittelt *in* jeder Zeitscheibe neben dem Satz von Sollwerten für den normalen Betrieb auch eine geplante Trajektorie für den *normalen Betrieb,* beispielsweise in der Nachricht, in welcher es den Satz von Sollwerten für den Normalbetrieb an das Monitor Subsystem, MSS, sendet.
- Der Zeitserver ist fehlertolerant.
- Die Datenverarbeitungssubsysteme sind *unsichere* Subsysteme, d.h. sie enthalten *komplexe Software,* die auf nicht fehlertoleranter Hardware ausgeführt wird.
- Die Datenverarbeitungssubsysteme enthalten eine diversitäre Software, beispielsweise zur Berechnung bzw. Überprüfung der Sollwerte für die Aktuatoren und/oder zur Berechung eines Umweltmodells bzw. von Umweltmodellen.
- Jedes der Datenverarbeitungssubsysteme verfügt über einen eigenen Satz von Sensoren.
- Jedes der Subsysteme verfügt über eine eigene Energieversorgung.

Im Folgenden ist die Erfindung an Hand der Zeichung beispielhaft näher erläutert. Es zeigt
- Fig. 1: einen Überblick über die Architektur des verteilten Echtzeitcomputersystems,
- Fig. 2: eine Realisierung einer Uhrensynchronisation mittels eines fehlertoleranten Zeitservers, und
- Fig. 3: eine Realisierung der Uhrensynchronisation mittels der Subsysteme des Echtzeitcomputersystems.

Im Folgenden erfolgt vorerst eine

### Erklärung von verwendeten Begriffen:

Im Folgenden sind wichtige in diesem Dokument verwendeten Begriffe erklärt:

| | |
|---|---|
| anormaler Betrieb | Der Betrieb eines →Cyber-physical Systems (CPS) (z.B. eines Kraftfahrzeugs) unter Bedingungen, die von der Spezifikation des CPS und dessen Umgebung abweichen. |
| ASIL | *Automotive Safety Integrity* Levels-Sicherheitsstufen die im ISO Standard ISO 26262 beschrieben sind |
| Byzantinischer Fehler | Als byzantinische Fehler bezeichnet man in der Informationstechnik Fehler, bei denen sich ein System beliebig falsch verhält [Wikib] |
| Critical Event Handling Subsystem (CEHSS) | Ein -->Subsystem das im →anormalen Betrieb die Sollwerte für die Aktuatoren errechnet. |
| Cyber-Physical System (CPS) | Ein System, das eine technische Vorrichtung und ein die Vorrichtung steuerndes Echtzeitcomputersystem umfasst. |
| diversitäre Software | Zwei Softwaresysteme sind *diversitär,* wenn die gegebene Aufgabenstellung von unabhängigen Entwicklungsteams, mit unterschiedlichen Entwicklungswerkzeugen unter dem Einsatz von unterschiedlichen Algorithmen gelöst wird. Diverse Software minimiert die Wahrscheinlichkeit, dass in zwei redundanten diversen Softwaresystemen ein Softwarefehler gleichzeitig auftritt. |
| einfache Software | Software, die weniger als 10000 Befehle enthält und nach ASIL D entwickelt wurde, um alle Entwurfsfehler zu finden. |
| Fail Silent FCU | Eine →FCU, die im Fehlerfall keine Ausgabenachrichten produziert. |
| Fault-Containment Unit (FCU) | Ein →Subsystem, das die unmittelbaren Folgen aller internen Fehlerursachen abkapselt und an der Oberfläche ein definiertes Fehlverhalten der Ausgabenachrichten aufweist. Durch die Abkapselung wird erreicht, dass zwei FCUs weitestgehend unabhängig voneinander ausfallen. →Fail silent FCU. |
| Fault-Tolerant Decision Subsystem (FTDSS) | Ein -->Subsystem das →einfache Software enthält, die auf einer fehlertoleranten Hardware ausgeführt wird und das entscheidet, welche Sollwerte an die Aktuatoren geliefert werden. |
| komplexe Software | Software, die mehr als 10000 Befehle umfasst oder nicht nach ASIL D entwickelt wurde. In komplexer Software können Entwurfsfehler enthalten sein. |
| Korrektheits-indikator | Eine Variable, die den Wert TRUE oder FALSE annehmen kann und die mitteilt, ob ein zu überprüfendes Ergebnis korrekt ist. |
| kritisches Ereignis (critical event) | Ein Ereignis, das den Übergang vom →anormalen Betrieb zum →anormalen Betrieb auslöst. |
| MTTF-Mean-Time to Fail | Mittlere Zeit bis zum Auftreten eines Ausfalls im Betrieb eines Systems. |
| Monitor Subsystem (MSS) | Ein →Subsystem, das überprüft, ob die Ausgabewerte des →Normal-Processing Subsystem (NPSS) und des -->Critical Event Handling Subsystem (CEHSS) einen sicheren Betrieb gewährleisten. |
| Normal-Processing Subsystem (NPSS) | Ein →Subsystem, das im →normalen Betrieb die Sollwerte für die Aktuatoren errechnet. |
| normaler Betrieb | Der Betrieb eines →*Cyber-physical Systems (CPS)* (z.B. eines Kraftfahrzeugs) unter den Bedingungen, die in der Spezifikation des CPS und dessen Umgebung enthalten sind. |
| sicheres Subsystem | Ein → *Subsystem* in dem →*einfache Software* auf einer fehlertoleranten Hardware ausgeführt wird |
| Subsystem | Ein Teilsystem eines verteilten Echtzeitcomputersystems eines →CPSs. Ein Subsystem ist eine weitgehend abgeschlossene Einheit aus Hardware und Software, die aus den Eingabedaten und dem inneren Zustand des Subsystems Ausgabedaten und einen neuen inneren Zustand errechnet. Ein Subsystem kommuniziert mit anderen Subsystemen über den Austausch von Nachrichten. |
| Trajektorie | Bahn oder Bewegungspfad eines Objekts |
| unsicheres Subsystem | Ein →Subsystem in dem →komplexe Software ausgeführt wird oder nicht-fehlertolerante Hardware eingesetzt wird. |
| Wiederanlauf eines Subsystems | Der Wiederanlauf eines Subsystems umfasst alle Aktionene eines Subsystems zwischen dem Zeitpunkt des Resets der Hardware des Subsystems und dem Zeitpunkt der Wiederaufname des -->normalen Betriebs. |

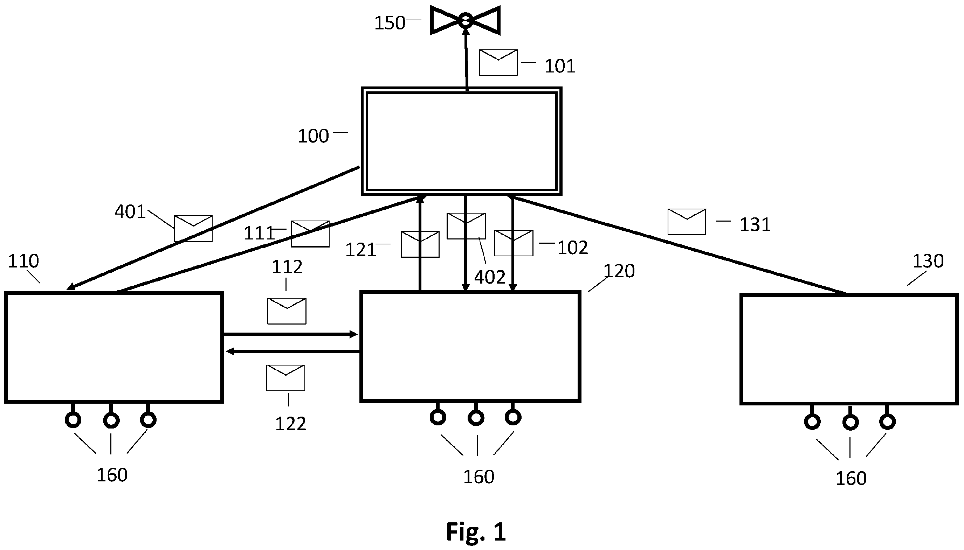

Fig. 1 zeigt die Struktur des verteilten Echtzeitcomputersystem zur Steuerung einer technischen Vorrichtung, z.B. einer technischen Anlage oder einer Maschine, wie etwa einem Roboter oder einem Fahrzeug, insbesondere einem Kraftfahrzeug.

Das Echtzeitcomputersystem umfasst, wie in Fig. 1 dargestellt, Subsysteme **100, 110, 120, 130,** wobei jedes Subsystem eine *Fault-Containment Unit* ist und die Subsysteme vorzugsweise in einer Hierarchie angeordnet sind. Weiters umfasst in diesem Beispiel das Echtzeitcomputersystem einen Zeitserver **210,** welcher außerhalb der gegebenenfalls realisierten Hierarchie steht.

In dem Echtzeitcomputersystem ist in bekannter Weise, bzw. mittels des Zeitservers **210,** eine globale Zeit realisiert, mittels welcher die Subsysteme **100, 110, 120, 130** zeitlich synchronisiert sind. Die Zeitachse ist in Zeitscheiben unterteilt, das sind Zeitabschnitte gleicher Dauer, die vorzugsweise unmittelbar aneinander anschließen,wobei über die globale Zeit diese Zeitscheiben für alle Subsysteme miteinander synchronisiert sind, sodass eine jeweils betrachtete Zeitscheibe für jedes der Subsysteme zum gleichen Zeitpunkt beginnt und endet.

Eines der Subsysteme, das sogenannte *Entscheidungssubsystem,* das *Fault-Tolerant Decision Subsystem* (FTDSS) **100,** welches vorzugsweise an der Spitze der Hierarchie steht, kann mittels einer Nachricht **101** in jeder Zeitscheibe Sollwerte an Aktuatoren **150** übergeben.

Weiters sind drei der Subsysteme als sogenannte Datenverarbeitungssubsysteme ausgebildet, welche sich vorzugsweise, in Bezug auf das FTDSS, auf der nächst niedrigeren Hierarchieebene befinden. Konkret handelt es sich bei diesen Datenverarbeitungssubsystemen um das *Normal-Processing Subsystem (NPSS)* **110,** das *Monitor Subsystem (MSS)* **120,** und das *Critical Event Handling Subsystem (CEHSS)* **130.** Diese drei Datenverarbeitungssubsysteme erfassen mit Sensoren **160** die Sensordaten einer Umgebung und werten diese Sensordaten unabhängig voneinander, vorzugsweise mit diversitärer, Software aus.

Das *Fault-Tolerant Decision Subsystem* (FTDSS) **100** ist ein sicheres Subsystem, d.h. es enthält eine einfache Software, die auf einer fehlertoleranten Hardware ausgeführt wird. Es wird angenommen, dass ein sicheres Subsystem die gegebenen Zuverlässigkeitsanforderungen, abhängig von der konkreten Anwendung, wie eingangs beschrieben erfüllt.

Die Datenverarbeitungssubsysteme **110, 120, 130** können *unsichere* Subsysteme sein, d.h. sie können *komplexe Software* enthalten, die auf nicht fehlertoleranter Hardware ausgeführt wird. Es wird angenommen, dass ein komplexes Softwaresystem nach ASIL B entwickelt und validiert wird und im Betrieb die mittlere Zeit (MTTF) bis zum Auftreten eines Fehlers bei 10⁻⁴ Stunden liegt. Es kann nicht ausgeschlossen werden, dass in einem unsicheren Subsystem ein byzantinischer Fehler auftritt.

Das *Normal-Processing Subsystem (NPSS)* **110** beobachtet am Beginn jeder Zeitscheibe die Umgebung mit, vorzugsweise eigenen, Sensoren **160,** baut ein Umweltmodell auf und errechnet einen Satz von Sollwerten für die Aktoren **150** im normalen Betrieb. In einer Nachricht **111** werden die Sollwerte, die das Subsystem **110** errechnet hat, an das *Fault-Tolerant Decision Subsystem* (FTDSS) **100** und in einer Nachricht **112** an das Monitor Subsystem (MSS) **120** gesendet. Im Falle, dass das Subsystem **110** erkennt, dass die Annahmen über den normalen Betrieb verletzt worden sind, bricht es einen laufenden Prozess ab und führt die technische Vorrichtung in einen sicheren Zustand. Zusätzlich kann ein Operator, z.B. der Fahrer eines Kraffarzeuges darüber informiert werden und ggf. diesem die Kontrolle übergeben werden.

Das *Critical Event Handling Subsystem (CEHSS)* **130** beobachtet am Beginn jeder Zeitscheibe die Umgebung mit, vorzugsweise eigenen, Sensoren **160,** baut mit diversitärer Software ein eigenes Umweltmodell auf und errechnet einen Satz von Sollwerten für die Aktoren **150** im anormalen *Betrieb.* Es sendet diese Sollwerte in einer Nachricht **131** an das *Fault-Tolerant Decision Subsystem* (FTDSS) **100.**

Das *Fault-Tolerant Decision Subsystem* (FTDSS) **100** empfängt in jeder Zeitscheibe die Nachrichten **111, 131** mit den Sollwerten für den *normalen* und den *anomalen* Betrieb und sendet diese Sollwerte in einer Nachricht **102** an das *Monitor Subsystem (MSS)* **120.**

Das Monitor Subsystem (MSS) **120** überprüft in jeder Zeitscheibe, ob der Satz von Sollwerten für den normalen Betrieb, den es direkt vom *Normal-Processing Subsystem (NPSS)* **110** in der Nachricht **112** erhalten hat, mit einem Umweltmodell, das vom MSS **120** auf Basis von mit Sensoren **160** ermittelten Sensordaten mit diversitärer Software errechnet wurde, vereinbar ist und eine sichere Führung der technischen Vorrichtung unter normalen Bedingungen gewährleistet.

Ein Umweltmodell ist beispielsweise eine digitale Datenstruktur, die zu einem gegebenen Zeitpunkt ein Abbild der für die vorgegebene Aufgabe wesentlichen Charakteristika der Umwelt einer technischen Vorrichtung darstellt. Ein Beispiel für ein Umweltmodell ist die Beschreibung einer Straße und der zum gewählten Zeitpunkt auf der Straße befindlichen Objekte.

Das Monitor Subsystem (MSS) **120** überprüft ferner, ob der Satz von Sollwerten, den es vom *Normal-Processing Subsystem (NPSS)* **110** in der Nachricht **112** direkt erhält, identisch ist mit dem entsprechenden Satz von Sollwerten, der vom *Normal-Processing Subsystem (NPSS)* **110** über das *Fault-Tolerant Decision Subsystem* (FTDSS) **100** in der Nachricht **102** an das Monitor Subsystem (MSS) **120** gesendet wurde.

Diese zweite Überprüfung ist erforderlich, da folgender bösartiger byzantinischer Fehler des *Normal-Processing Subsystem (NPSS)* **110** erkannt werden muss: Ein fehlerhaftes *Normal-Processing Subsystem (NPSS)* **110** sendet *richtige Sollwerte* an das Monitor Subsystem (MSS) **120** und *fehlerhafte Sollwerte* an das *Fault-Tolerant Decision Subsystem* (FTDSS) **100.**

Falls beide Überprüfungen, die das Monitor Subsystem (MSS) **120** durchgeführt hat, positiv sind, wird der Korrektheitsindikator-1 auf den Wert TRUE gesetzt. Falls eine der beiden Überprüfungen negativ ist, wird der Korrektheitsindikator-1 auf den Wert FALSE gesetzt. Anschließend an die Überprüfung sendet das Monitor Subsystem (MSS) **120** den Korrektheitsindikator-1 in einer Nachricht **121** an das *Fault-Tolerant Decision Subsystem* (FTDSS) **100.**

Das *Fault-Tolerant Decision Subsystem* (FTDSS) **100** entscheidet in jeder Zeitscheibe wie folgt: Im Falle, dass der Korrektheitsindikator-1 den Wert TRUE enthält, wird der Satz von Sollwerten für den normalen Betrieb in der Nachricht **101** an die Aktuatoren **150** gesendet, im Falle, dass der Korrektheitsindikator-1 den Wert FALSE enthält oder dass die erwartete Nachricht **121** mit dem Korrektheitsindikator-1 ausbleibt, wird der Satz von Sollwerten für den anormalen Betrieb in der Nachricht **101** an die Aktuatoren **150** weitergeleitet, und ab diesem Zeitpunkt werden in den folgenden Zeitscheiben nur noch Sollwerte für den anormalen Betrieb an die Aktuatoren **150** weitergeleitet, bis die technische Vorrichtung in einem sicheren Zustand angekommen ist. Das Ausbleiben der erwarteten Nachricht **121** mit dem Korrektheitsindikator-1 ist ein Indikator für den fail-silent Ausfall des Monitor Subsystem (MSS) **120.**

Das *Fault-Tolerant Decision Subsystem* (FTDSS) **100** beinhaltet eine, insbesondere sehr, einfache Software, die ohne die Unterstützung von Betriebssystemen realisiert werden kann. Dies ist dahingehend von Vorteil, da erfahrungsgemäß Betriebssysteme komplex und nicht frei von Entwurfsfehlern sind [Cho01].

Das Monitor Subsystem (MSS) **120** muss in jeder Zeitscheibe auch überprüfen, ob der Satz von Sollwerten für den anormalen Betrieb, welches es vom *Critical Event Handling Subsystem (CEHSS)* **130** mittels der Nachrichten **131, 102** erhält, mit dem Umweltmodell, das auf der Basis der Sensordaten der Sensoren **160** des MSS vom MSS errechnet wurde, vereinbar ist und eine sichere Führung des Prozesses im anomalen Betrieb gewährleistet. Falls dies der Fall ist, wird vom Monitor Subsystem (MSS) **120** ein weiterer Korrektheitsindikator, der Korrektheitsindikator-2, auf den Wert TRUE gesetzt, und falls dies nicht der Fall ist, oder wenn vom MSS **120** in einer Zeitscheibe keine Nachricht vom CEHSS **130** empfangen wurde, wird der Korrektheitsindikator-2 auf den Wert FALSE gesetzt.

Die Übertragung der Sollwerte für den anormalen Betrieb über den Umweg mit den Nachrichten **131, 102** über das FTDSS **100** ist erforderlich, um einen byzantinischen Fehler des *Critical Event Handling Subsystem (CEHSS)* **130** auszuschließen.

Das Monitor Subsystem (MSS) **120** sendet den Wert des Korrektheitsindikator-2 bzw. den Korrektheitsindikator-2 an das *Normal-Processing Subsystem (NPSS)* **110** mit einer Nachricht **122,** sodass dem *Normal-Processing Subsystem (NPSS)* 110 mitgeteilt werden kann, ob im *Critical Event Handling Subsystem (CEHSS)* **130** ein Fehler aufgetreten ist oder dieses Subsystem durch einen fail-silent Fehler ausgefallen ist. Das *Normal-Processing Subsystem (NPSS)* **110** überprüft in jeder Zeitscheibe, ob der vom Monitor Subsystem (MSS) **120** erhaltene Korrektheitsindikator-2 den Wert FALSE einnimmt und falls dies der Fall ist, wird die technische Vorrichtung vom *Normal-Processing Subsystem (NPSS)* **110** in einen sicheren Zustand geführt.

Es ist vorteilhaft, wenn jedes der Datenverarbeitungssubsysteme **110, 120, 130** eine Analyse der Sensordaten, die Fusion der Sensordaten der Sensoren **160** und/oder die Festlegung von Trajektorien mittels diverser Software durchführt. Dadurch sinkt die Wahrscheinlichkeit, dass derselbe Softwarefehler in mehreren Subsystemen auftritt.

Eine Trajektorie ist beispielsweise ein Pfad, den die technische Vorrichtung im Laufe der Zeit ausführen kann um die vorgegebene Aufgabe zu erfüllen. Die Charakteristika der Trajektorien einer Vorrichtung hängen von der Konstruktion der Vorrichtung, der vorgegebenen Aufgabenstellung und den aktuellen Umweltbedingungen ab. Zum Beispiel bezeichnet man einen möglichen Weg, den ein Fahrzeug unter den gegebenen Umweltbedingungen ausführen kann um sein Ziel zu erreichen, alsTrajektorie.

Eine Trajektorie kann auch als die zeitliche Abfolge von Sollwerten beschrieben werden.

Es ist vorteilhaft, wenn jedes der Datenverarbeitungssubsysteme **110, 120, 130** über einen eigenen Satz von Sensoren **160** verfügt. Dadurch wird verhindert, dass ein Fehler in einem Sensor zu einem korrelierten Ausfall von mehreren Subsystemen führen kann.

Das *Normal-Processing Subsystem (NPSS)* **110** kann in jeder Zeitscheibe neben dem Satz von Sollwerten auch die geplante Trajektorie für den *normalen Betrieb* in der Nachricht **112** an das Monitor Subsystem (MSS) **120** senden, um dem Monitor Subsystem (MSS) **120** die Möglichkeit zu geben, die geplante Trajektorien zu überprüfen.

Weiters sendet das *Fault-Tolerant Decision Subsystem,* FTDSS, **100** in jeder Zeitscheibe die an die Aktuatoren **150** weitergeleiteten Sollwerte in Nachrichten **401, 402** auch an das NPSS **110** und an das MSS **120.** Wenn das NPSS **110** und/oder das MSS **120** aufgrund einer Überprüfung der in den Nachrichten **401, 402** enthaltenen Sollwerte feststellen, dass das FTDSS **100** die Sollwerte für den anormalen Betrieb an die Aktuatoren **150** weitergeleitet hat, wird ein Wiederanlauf des MSS **120** und des NPSS **110** ausgelöst.

Das CEHSS **130** teilt in der Nachricht **131** dem FTDSS **100** mit, ob sich die technische Vorrichtung in einem sicheren Zustand befindet.

Der Wiederanlauf der beiden Datenverarbeitungssubsysteme, nämlich des NPSS **110** und des MSS **120,** umfasst dabei jeweils die folgenden Schritte:
a) Reset der Hardware des Datenverarbeitungssubsystems,
b) Ausführung einer Testsoftware zur zur Feststellung der Integrität des Datenverarbeitungssubsystems,
c) Neuinitialisierung und Neustart der Software des Datenverarbeitungssubsystems,
d) Durchführung von Berechnungen mit den durch am Beginn einer Zeitscheibe durchgeführten Beobachtungen der Umgebung gewonnenen Sensordaten.

Der Wiederanlauf abgeschlossen ist, sobald
- das FTDSS **100** auf Basis des Inhalts der Nachricht **131** des CEHSS **130,** in welcher das CEHSS **130** mitteilt, ob sich die technische Vorrichtung in einem sicheren Zustand befindet, feststellt, dass sich die Anlage in einem sicheren Zustand befindet, und
- das FTDSS **100** vom *NPSS* **110** in einer Zeitscheibe einen Satz von Sollwerten für den *normalen Betrieb,* etwa in der Nachricht **111,** empfängt, und
das FTDSS **100** vom MSS **120** in dieser Zeitscheibe, etwa mit einer Nachricht **121,** den Korrektheitsindikator-1 mit dem Wert TRUE empfängt.

Nach dem Abschluss des Wiederanlaufs übergibt das FTDSS **100** wieder die vom NPSS **110** erhaltenen Sollwerte für den normalen Betrieb an die Aktuatoren.

Vorzugsweise sind sowohl das NPSS **110** als auch das MSS **120** dazu eingerichtet, ihren Wiederanlauf selbst auszulösen. Beispielsweise verfügen dazu das NPSS **110** und das MSS **120** jeweils über einen Watchdog, der den Wiederanlauf des jeweiligen Datenverarbeitungssubsystems **110, 120** auslösen kann. Vorzugsweise verfügt auch das CEHSS **130** über einen Watchdog, der einen Wiederanlauf des CEHSS **130** auslösen kann.

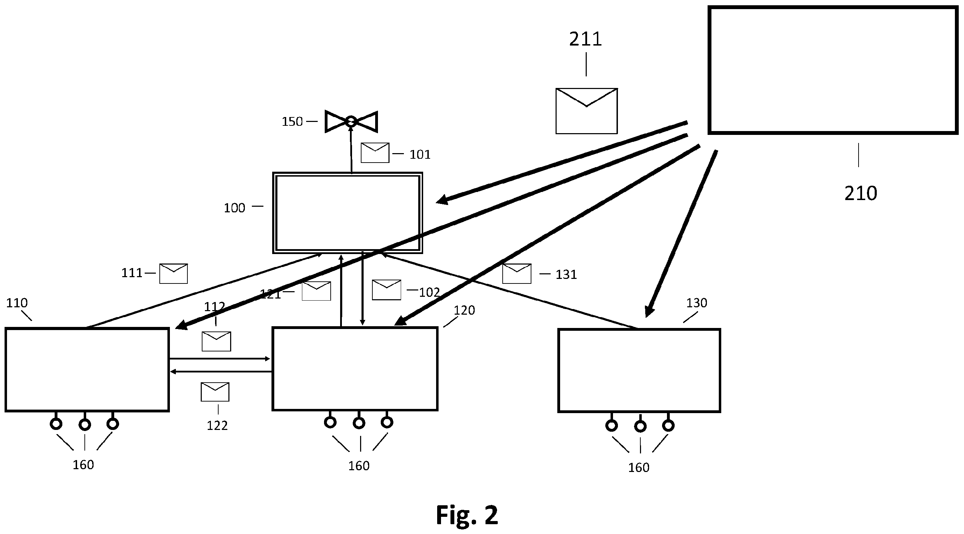

Fig. 2 zeigt einen Zeitserver **210,** wie er in einem Echtzeitcomputersystem aus Fig. 1 beispielhaft vorgesehen sein kann, der periodisch Synchronisationsnachrichten **211** an die Subsysteme **100, 110, 120, 130** zur Synchronisation der Uhren der Subsysteme sendet. Es ist vorteilhaft, wenn der Zeitserver **210** fehlertolerant ausgeführt ist.

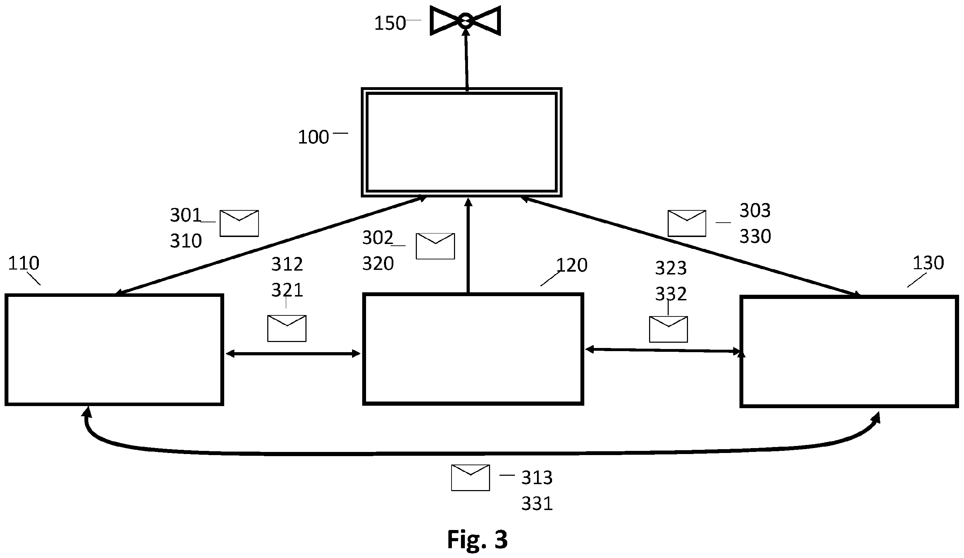

Da die vier Subsysteme **100, 110, 120, 130** autonome FCUs mit unabhängigen Oszillatoren/Uhren sind, ist es auch möglich, eine fehlertolerante Uhrensynchronisation zur Bildung einer globalen Zeit mittels diese vier Subsysteme selbst zu realisieren. Fig.3 zeigt den Nachrichtenaustausch, der erforderlich ist, um eine fehlertolerante Uhrensynchronisation, wie in [Kop12, Seite 69-74] beschrieben, mit den vier Subsysteme **100, 110, 120, 130** durchzuführen. Dazu müssen in jeder Synchronisationsperiode folgende Synchronisationsnachrichten ausgetauscht werden:
- Synchronisationsnachricht **301** vom Subsystem **100** zum Subsystem **110**
- Synchronisationsnachricht **310** vom Subsystem **110** zum Subsystem **100**
- Synchronisationsnachricht **302** von Subsystem **100** zum Subsystem **120**
- Synchronisationsnachricht **320** vom Subsystem **120** zum Subsystem **100**
- Synchronisationsnachricht **303** vom Subsystem **100** zum Subsystem **130**
- Synchronisationsnachricht **330** vom Subsystem **130** zum Subsystem **100**
- Synchronisationsnachricht **312** vom Subsystem **110** zum Subsystem **120**
- Synchronisationsnachricht **321** vom Subsystem **120** zum Subsystem **110**
- Synchronisationsnachricht **323** vom Subsystem **120** zum Subsystem **130**
- Synchronisationsnachricht **332** vom Subsystem **130** zum Subsystem **120**
- Synchronisationsnachricht **313** vom Subsystem **110** zum Subsystem **130**
- Synchronisationsnachricht **331** vom Subsystem **130** zum Subsystem **110**

Generell gilt, dass, um verhindern zu können, dass ein Ausfall einer zentralen Stromversorgung zu einem Ausfall aller Subsysteme **100, 110, 120, 130, 210** führt, es vorteilhaft ist, wenn jedes der Subsysteme **100, 110, 120, 130, 210** eine unabhängige Energieversorgung aufweist (z.B. durch eine eigene Batterie).

Der folgende Überblick zeigt abschließend, wie ein in einem Subsystem auftretender Fehler oder eine Intrusion erkannt und behandelt wird.

### Fehleranalyse

| **Fehlerhaftes Subsystem oder Intrusion in** | **Fehlererkennung** | **Fehlerbehandlung** |
|---|---|---|
| *Normal-Processing Subsystem* | Monitor Subsystem erkennt Fehler und meldet den Fehler an das Fault-Tolerant Decision System | Fault-Tolerant Decision System bringt die Anlage in einen sicheren Zustand |
| *Critical Event Handling Subsystem* | Monitor Subsystem erkennt Fehler und meldet den Fehler an das Normal-Processing Subsystem | Normal-Processing Subsystem bringt die Anlage in einen sicheren Zustand |
| Monitor Subsystem | Fault-Tolerant Decision Subsystem erkennt den Fehler | Fault-Tolerant Decision System bringt die Anlage in einen sicheren Zustand |
| *Fault-Tolerant Decision Subsystem* | keine Fehlererkennung vorgesehen, da einfache Software auf | keine Fehlerbehandlung vorgesehen |
| | fehlertoleranter Hardware frei von Fehlern ist | |

### Zitierte Literatur:

[Avi85] Avizienis, A. The N-Version Approach to Fault-Tolerant Systems. IEEE Trans. on Software Engineering. Vol. 11, No 12, pp. 1491-1501. 1985.
[Cho01] Chou, A. et al. An Empirical Study of Operating System Errors. Proc. of the ACM SOPS 2001 pp. 73-88. 2001
ISO Standard ISO 26262 über funktionale Sicherheit.
[Dvo09] Dvorak, D.L. Editor. NASA Study on Flight Software Complexity. Final Report. Jet Propulsion Laboratory, Pasadena, Cal. USA. 2009.
[Kop11] Kopetz, H. Real-Time Systems-Design Principles for Distributed Embedded Applications. Springer Verlag. 2011
[Wiklb] Wikipedia, Definition von einem byzantinischen Fehler URL: https://de.wikipedia.org/wiki/Byzantinischer Fehler
[Con02] Constantinescu,C.. Impact of deep submicron technology on dependability of VLSI circuits. Proceedings International Conference on Dependable Systems and Networks, Washington, DC, USA, pp. 205-209, 2002

## Patentansprüche

1. Verfahren zur Steuerung einer technischen Vorrichtung, z.B. einer technischen Anlage, wie etwa einem Roboter oder einem Fahrzeug, insbesondere einem Kraftfahrzeug, mit einem verteilten Echtzeitcomputersystem, wobei das Echtzeitcomputersystem
Subsysteme, insbesondere eine Vielzahl von Subsystemen, umfasst, wobei beispielsweise die Subsysteme hierarchisch angeordnet sind,
und wobei die Subsysteme über eine globale Zeit synchronisiert sind, beispielsweise indem ein Zeitserver **(210)** vorhanden ist, der vorzugsweise außerhalb der Hierarchie der Subsysteme steht, wobei der Zeitserver **(210)** periodisch Synchronisationsnachrichten **(211)** an jedes Subsystem, etwa an die Uhren jedes Subsystems, zur Synchronisation der Subsysteme bzw. der Uhren der Subsysteme zum Aufbau der globalen Zeit sendet, und wobei
unter Verwendung dieser globalen Zeit die Zeitachse in eine Folge von synchronisierten Zeitscheiben unterteilt wird,
**dadurch gekennzeichnet, dass**
jedes Subsystem (**100, 110, 120, 130**), und falls vorhanden der Zeitserver **(210),** jeweils eine eigene Fault-Containment Unit bilden, und wobei
eines der Subsysteme ein Entscheidungssubsystem, das sogenannte *Fault-Tolerant Decision Subsystem,* FTDSS, **(100),** ist, welches vorzugsweise in der höchsten Ebene der Hierarchie platziert ist, wobei das FTDSS **(100)** mittels Nachrichten **(101)** in jeder Zeitscheibe Sollwerte an Aktuatoren **(150)** übergeben kann, wobei das *Fault-Tolerant Decision Subsystem,* FTDSS, **(100)** ein sicheres Subsystem ist, d.h. einfache Software enthält, die auf einer fehlertoleranten Hardware ausgeführt wird, und wobei
mindestens oder genau drei *Datenverarbeitungssubsysteme,* ein *Normal-Processing Subsystem, NPSS,* **(110),** ein *Monitor Subsystem, MSS,* **(120),** und ein *Critical Event Handling Subsystem, CEHSS,* **(130),** vorgesehen sind, welche vorzugsweise auf der nächst niedrigeren Hierarchieebene platziert sind, wobei diese zumindest oder genau drei Datenverarbeitungssubsysteme mit Sensoren **(160)** Sensordaten einer Umgebung, die mit den Sensoren **(160)** beobachtet wird, erfassen und diese Sensordaten unabhängig voneinander auswerten, wobei
die Umgebung jeweils am Beginn einer Zeitscheibe von den Datenverarbeitungssubsystemen (**110, 120, 130)** beobachtet wird und während dieser Zeitscheibe Berechnungen mit den durch die zu Beginn der Zeitscheibe durchgeführten Beobachtungen der Umgebung gewonnenen Sensordaten durchgeführt werden, und wobei
i. das *Normal-Processing Subsystem, NPSS,* **(110)** in jeder Zeitscheibe, vorzugsweise am Ende der Zeitscheibe, einen Satz von Sollwerten für einen *normalen Betrieb* in einer Nachricht **(111)** an das *Fault-Tolerant Decision Subsystem,* FTDSS, **(100)** und in einer Nachricht **(112)** an das Monitor Subsystem, MSS, **(120)** sendet, und wobei
ii. das *Critical Event Handling Subsystem, CEHSS,* **(130)** in jeder Zeitscheibe, vorzugsweise am Ende der Zeitscheibe, einen Satz von Sollwerten für einen *anormalen Betrieb* in einer Nachricht **(131)** an das *Fault-Tolerant Decision Subsystem,* FTDSS, **(100)** sendet, und wobei das CEHSS **(130)** in dieser Nachricht **(131)** dem FTDSS **(100)** auch mitteilt, ob sich die technische Vorrichtung in einem sicheren Zustand befindet, und wobei
iii. das *Fault-Tolerant Decision Subsystem,* FTDSS, **(100)** in jeder Zeitscheibe den empfangenen Satz von Sollwerten für den normalen Betrieb, vorzugsweise am Ende der Zeitscheibe, in einer Nachricht **(102)** an das *Monitor Subsystem, MSS,* **(120)** sendet, und wobei vorzugsweise das *Fault-Tolerant Decision Subsystem,* FTDSS, **(100)** weiters in jeder Zeitscheibe den empfangenen Satz von Sollwerten für den anormalen Betrieb, vorzugsweise am Ende der Zeitscheibe, in einer Nachricht **(102)** an das *Monitor Subsystem, MSS,* **(120)** sendet, und wobei
iv. das Monitor Subsystem, MSS, **(120)** in jeder Zeitscheibe eine Überprüfung durchführt, ob der Satz von Sollwerten für den normalen Betrieb, den es vom *Normal-Processing Subsystem, NPSS,* **(110)** in der Nachricht **(112)** erhalten hat, mit einem Umweltmodell, das vom MSS **(120)** auf der Basis der Sensordaten **(160)** des MSS **(120)** errechnet wurde, vereinbar ist und eine sichere Führung der technischen Vorrichtung unter normalen Bedingungen gewährleistet und weiters das Monitor Subsystem, MSS, **(120)** in jeder Zeitscheibe eine Überprüfung durchführt, ob der Satz von Sollwerten für den normalen Betrieb, den es vom *Normal-Processing Subsystem, NPSS,* **(110)** in der Nachricht **(112)** erhalten hat, identisch ist mit dem entsprechenden Satz von Sollwerten, die vom *Normal-Processing Subsystem, NPSS,* **(110)** über das *Fault-Tolerant Decision Subsystem,* FTDSS, **(100)** an das Monitor Subsystem, MSS, **(120)** gesendet wurden, und
falls beide Überprüfungen positiv sind, einen Korrektheitsindikator, Korrektheitsindikator-1, auf den Wert TRUE setzt und, falls eine der beiden Überprüfungen negativ ist oder beide Überprüfungen negativ sind, den Korrektheitsindikator-1 auf den Wert FALSE setzt und den Korrektheitsindikator-1 bzw. den Wert des Korrektheitsindikator-1 in jeder Zeitscheibe in einer Nachricht **(121)** an das *Fault-Tolerant Decision Subsystem,* FTDSS, **(100)** sendet, und wobei
das *Fault-Tolerant Decision Subsystem,* FTDSS, **(100)** in jeder Zeitscheibe wie folgt entscheidet: im Falle, dass der Korrektheitsindikator-1 den Wert TRUE aufweist, wird der Satz von Sollwerten für den normalen Betrieb, etwa in Nachrichten **(101),** an die Aktuatoren **(150)** übergeben, im Falle, dass der Korrektheitsindikator-1 den Wert FALSE aufweist oder eine von dem FTDSS **(100)** erwartete Nachricht **(121)** mit dem Korrektheitsindikator-1 ausbleibt, wird der Satz von Sollwerten für den anormalen Betrieb, etwa in Nachrichten **(101),** an die Aktuatoren **(150)** weitergeleitet, wobei in diesem Fall ab diesem Zeitpunkt in den folgenden Zeitscheiben die Sollwerte für den anormalen Betrieb an die Aktuatoren **(150)** weitergeleitet werden,
bis die technische Vorrichtung einen sicheren Zustand erreicht hat, der vom CEHSS, vorzugsweise in der Nachricht **(131),** dem FTDSS **(100)** mitgeteilt wird, und wobei
das *Fault-Tolerant Decision Subsystem,* FTDSS, **(100)** in jeder Zeitscheibe die an die Aktuatoren **(150)** weitergeleiteten Sollwerte in Nachrichten **(401, 402)** an das NPSS **(110)** und an das MSS **(120)** sendet, und wobei
im Falle, dass das NPSS **(110)** und/oder das MSS **(120 )** aufgrund der Überprüfung der in den Nachrichten **(401, 402)** enthaltenen Sollwerte feststellen, dass das FTDSS **(100)** die Sollwerte für den anormalen Betrieb an die Aktuatoren **(150)** weitergeleitet hat, ein Wiederanlauf des MSS **(120)** und des NPSS **(110)** ausgelöst wird, wobei vorzugsweise sowohl das NPSS **(110)** als auch das MSS **(120)** dazu eingerichtet sind, jeweils ihren eigenen Wiederanlauf auszulösen,
wobei der Wiederanlauf abgeschlossen ist, sobald
- das FTDSS **(100)** auf Basis des Inhalts der Nachricht **(131)** des CEHSS (130), in welcher das CEHSS (130) mitteilt, ob sich die technische Vorrichtung in einem sicheren Zustand befindet, feststellt, dass sich die Anlage in einem sicheren Zustand befindet, und
- das FTDSS (100) vom *NPSS* **(110)** in einer Zeitscheibe einen Satz von Sollwerten für den *normalen Betrieb,* etwa in einer Nachricht **(111),** empfängt, und
- das FTDSS (100) vom MSS **(120)** in dieser Zeitscheibe, etwa mit einer Nachricht **(121),** den Korrektheitsindikator-1 mit dem Wert TRUE empfängt,
und wobei nach dem Abschluss des Wiederanlaufs das FTDSS **(100)** wieder die vom NPSS **(110)** erhaltenen Sollwerte für den normalen Betrieb an die Aktuatoren übergibt, sodass die Schritte i. - iv. wieder durchgeführt werden können bzw. durchgeführt werden,
und wobei der Wiederanlauf der beiden Datenverarbeitungssubsysteme, nämlich des NPSS **(110)** und des MSS **(120),** jeweils die folgenden Schritte umfasst:
a) Reset der Hardware des Datenverarbeitungssubsystems,
b) Ausführung einer Testsoftware zur zur Feststellung der Integrität des Datenverarbeitungssubsystems,
c) Neuinitialisierung und Neustart der Software des Datenverarbeitungssubsystems,
d) Durchführung von Berechnungen mit den durch am Beginn einer Zeitscheibe durchgeführten Beobachtungen der Umgebung gewonnenen Sensordaten.

2. Verfahren nach Anspruch 1, **wobei** ein Wiederanlauf des NPSS **(110)** durch einen Watchdog des NPSS **(100)** ausgelöst wird, und/oder ein Wiederanlauf des MSS **(120)** durch einen Watchdog des MSS **(120)** ausgelöst wird, und/oder ein Wiederanlauf des CEHSS **(130)** durch einen Watchdog des CEHSS **(130)** ausgelöst werden kann.

3. Verfahren nach Anspruch 1 oder 2, **wobei** das *Fault-Tolerant Decision Subsystem,* FTDSS, **(100)** weiters in jeder Zeitscheibe den empfangenen Satz von Sollwerten für den anormalen Betrieb, vorzugsweise am Ende der Zeitscheibe, in einer Nachricht **(102)** an das *Monitor Subsystem, MSS,* **(120)** sendet, und wobei das Monitor Subsystem, MSS, **(120)** in jeder Zeitscheibe überprüft, ob der Satz von Sollwerten für den anormalen Betrieb, welchen es vom *Critical Event Handling Subsystem, CEHSS,* **(130)** über das FTDSS **(100),** insbesondere mittels Nachrichten **(131, 102),** erhält, mit dem Umweltmodell, das auf der Basis der Sensordaten des MSS vom MSS errechnet wurde, vereinbar ist und eine sichere Führung der technischen Vorrichtung im anomalen Betrieb gewährleistet, und falls dies der Fall ist, einen weiteren Korrektheitsindikator, den Korrektheitsindikator-2, auf den Wert TRUE setzt, und falls dies nicht der Fall ist oder wenn in einer Zeitscheibe kein Satz von Sollwerten für den anormalen Betrieb vom CEHSS **(130)** empfangen wurde, den Korrektheitsindikator-2 auf den Wert FALSE setzt, und wobei das Monitor Subsystem, MSS, **(120)** den Korrektheitsindikator-2 nach einem Verzögerungsintervall, das länger ist als die Wiederanlaufdauer des CEHSS(130) an das *Normal-Processing Subsystem, NPSS,* **(110)** sendet, und wobei das *Normal-Processing Subsystem, NPSS,* **(110)** überprüft, ob der vom Monitor Subsystem, MSS, erhaltene Korrektheitsindikator-2 den Wert FALSE einnimmt, und falls dies der Fall ist, die normale Führung der technischen Vorrichtung abbricht und die technische Vorrichtung in einen sicheren Zustand führt.

4. Verfahren nach einem der Ansprüche 1 bis 3, **wobei** das *Normal-Processing Subsystem, NPSS,* **(110)** *in* jeder Zeitscheibe neben dem Satz von Sollwerten für den normalen Betrieb auch eine geplante Trajektorie für den *normalen Betrieb,* beispielsweise in der Nachricht **(112),** in welcher es den Satz von Sollwerten für den Normalbetrieb an das Monitor Subsystem, MSS, **(120)** sendet, übermittelt.

5. Verfahren nach einem der Ansprüche 1 bis 4, **wobei** der Zeitserver fehlertolerant ist.

6. Verfahren nach einem der Ansprüche 1 bis 5, **wobei** die Datenverarbeitungssubsysteme **(110, 120, 130)** *unsichere* Subsysteme sind, d.h. sie enthalten *komplexe Software,* die auf nicht fehlertoleranter Hardware ausgeführt wird.

7. Verfahren nach einem der Ansprüche 1 bis 6, **wobei** die Datenverarbeitungssubsysteme **(110, 120, 130)** eine diversitäre Software enthalten, beispielsweise um die Sollwerte für die Aktuatoren (150) und/oder ein Umweltmodell zu berechnen.

8. Verfahren nach einem der Ansprüche 1 bis 7, **wobei** jedes der Datenverarbeitungssubsysteme **(110, 120, 130)** über einen eigenen Satz von Sensoren verfügt oder jedes Datenverarbeitungssubsystem **(110, 120, 130)** auf jeden der Sensoren Zugriff hat.

9. Verfahren nach einem der Ansprüche 1 bis 8, **wobei** jedes der Subsysteme **(100, 110, 120, 130, 210)** über eine eigene Energieversorgung verfügt.

10. Verteiltes Echtzeitcomputersystem, zur Steuerung einer technischen Vorrichtung, z.B. einer technischen Anlage, wie etwa einem Roboter oder einem Fahrzeug, insbesondere einem Kraftfahrzeug, wobei das Echtzeitcomputersystem
Subsysteme, insbesondere eine Vielzahl von Subsystemen, umfasst, wobei beispielsweise die Subsysteme hierarchisch angeordnet sind,
und wobei die Subsysteme über eine globale Zeit synchronisiert sind, beispielsweise indem ein Zeitserver **(210)** vorhanden ist, der vorzugsweise außerhalb der Hierarchie der Subsysteme steht, wobei der Zeitserver **(210)** dazu eingerichtet ist, periodisch Synchronisationsnachrichten **(211)** an jedes Subsystem, etwa an die Uhren jedes Subsystems, zur Synchronisation der Subsysteme bzw. der Uhren der Subsysteme zum Aufbau der globalen Zeit zu senden, und wobei
unter Verwendung dieser globalen Zeit die Zeitachse in eine Folge von synchronisierten Zeitscheiben unterteilt ist,
**dadurch gekennzeichnet, dass**
jedes Subsystem (**100, 110, 120, 130**), und falls vorhanden der Zeitserver **(210),** jeweils eine eigene Fault-Containment Unit bilden, und wobei
eines der Subsysteme ein Entscheidungssubsystem, das sogenannte *Fault-Tolerant Decision Subsystem,* FTDSS, **(100),** ist, welches vorzugsweise in der höchsten Ebene der Hierarchie platziert ist, wobei das FTDSS **(100)** dazu eingerichtet ist, mittels Nachrichten **(101)** in jeder Zeitscheibe Sollwerte an Aktuatoren **(150)** zu übergeben, wobei das *Fault-Tolerant Decision Subsystem,* FTDSS, **(100)** ein sicheres Subsystem ist, d.h. einfache Software enthält, die auf einer fehlertoleranten Hardware ausgeführt wird, und wobei
mindestens oder genau drei *Datenverarbeitungssubsysteme,* ein *Normal-Processing Subsystem, NPSS,* **(110),** ein *Monitor Subsystem, MSS,* **(120),** und ein *Critical Event Handling Subsystem, CEHSS,* **(130),** vorgesehen sind, welche vorzugsweise auf der nächst niedrigeren Hierarchieebene platziert sind, wobei diese zumindest oder genau drei Datenverarbeitungssubsysteme dazu eingerichtet sind, mit Sensoren **(160)** Sensordaten einer Umgebung, die mit den Sensoren **(160)** beobachtet wird, zu erfassen und diese Sensordaten unabhängig voneinander auszuwerten, wobei
die Umgebung jeweils am Beginn einer Zeitscheibe von den Datenverarbeitungssubsystemen **(110, 120, 130)** beobachtet wird und während dieser Zeitscheibe Berechnungen mit den durch die zu Beginn der Zeitscheibe durchgeführten Beobachtungen der Umgebung gewonnenen Sensordaten durchgeführt werden, und wobei
i. das *Normal-Processing Subsystem, NPSS,* **(110)** dazu eingerichtet ist, in jeder Zeitscheibe, vorzugsweise am Ende der Zeitscheibe, einen Satz von Sollwerten für einen *normalen Betrieb* in einer Nachricht **(111)** an das *Fault-Tolerant Decision Subsystem,* FTDSS, **(100)** und in einer Nachricht **(112)** an das Monitor Subsystem, MSS, **(120)** zu senden, und wobei
ii. das *Critical Event Handling Subsystem, CEHSS,* (130) dazu eingerichtet ist, in jeder Zeitscheibe, vorzugsweise am Ende der Zeitscheibe, einen Satz von Sollwerten für einen *anormalen Betrieb* in einer Nachricht **(131)** an das *Fault-Tolerant Decision Subsystem,* FTDSS, **(100)** zu senden, und das CEHSS **(130)** dazu eingerichtet ist, vorzugsweise in dieser Nachricht **(131),** dem FTDSS **(100)** mitzuteilen, ob sich die technische Vorrichtung in einem sicheren Zustand befindet, und wobei
iii. das *Fault-Tolerant Decision Subsystem,* FTDSS, **(100)** dazu eingerichtet ist, den empfangene Satz von Sollwerten für den normalen Betrieb in jeder Zeitscheibe in einer Nachricht **(102)** an das *Monitor Subsystem, MSS,* **(120)** zu senden, und wobei vorzugsweise das *Fault-Tolerant Decision Subsystem,* FTDSS, **(100)** dazu eingerichtet ist, weiters in jeder Zeitscheibe den empfangenen Satz von Sollwerten für den anormalen Betrieb, vorzugsweise am Ende der Zeitscheibe, in einer Nachricht **(102)** an das *Monitor Subsystem, MSS,* **(120)** zu senden, und wobei
iv. das Monitor Subsystem, MSS, **(120)** dazu eingerichtet ist, in jeder Zeitscheibe eine Überprüfung durchzuführen, ob der Satz von Sollwerten für den normalen Betrieb, den es vom *Normal-Processing Subsystem, NPSS,* **(110)** in der Nachricht **(112)** erhalten hat, mit einem Umweltmodell, das vom MSS **(120)** auf der Basis der Sensordaten **(160)** des MSS **(120)** errechnet wurde, vereinbar ist und eine sichere Führung der technischen Vorrichtung unter normalen Bedingungen gewährleistet und weiters das Monitor Subsystem, MSS, **(120)** dazu eingerichtet ist, in jeder Zeitscheibe eine Überprüfung durchzuführen, ob der Satz von Sollwerten für den normalen Betrieb, den es vom *Normal-Processing Subsystem, NPSS,* **(110)** in der Nachricht **(112)** erhalten hat, identisch ist mit dem entsprechenden Satz von Sollwerten, die vom *Normal-Processing Subsystem, NPSS,* **(110)** über das *Fault-Tolerant Decision Subsystem,* FTDSS, **(100)** an das Monitor Subsystem, MSS, **(120)** gesendet wurden, und
falls beide Überprüfungen positiv sind, einen Korrektheitsindikator, Korrektheitsindikator-1, auf den Wert TRUE zu setzen und, falls eine der beiden Überprüfungen negativ ist oder beide Überprüfungen negativ sind, den Korrektheitsindikator-1 auf den Wert FALSE zu setzen und den Korrektheitsindikator-1 bzw. den Wert des Korrektheitsindikator-1 in jeder Zeitscheibe in einer Nachricht **(121)** an das *Fault-Tolerant Decision Subsystem,* FTDSS, **(100)** zu senden, und wobei
das *Fault-Tolerant Decision Subsystem,* FTDSS, **(100)** in jeder Zeitscheibe wie folgt entscheidet: im Falle, dass der Korrektheitsindikator-1 den Wert TRUE aufweist, wird der Satz von Sollwerten für den normalen Betrieb, etwa in Nachrichten **(101),** an die Aktuatoren **(150)** übergeben, im Falle, dass der Korrektheitsindikator-1 den Wert FALSE aufweist oder eine von dem FTDSS **(100)** erwartete Nachricht **(121)** mit dem Korrektheitsindikator-1 ausbleibt, wird der Satz von Sollwerten für den anormalen Betrieb, etwa in Nachrichten **(101),** an die Aktuatoren **(150)** weitergeleitet, wobei in diesem Fall ab diesem Zeitpunkt in den folgenden Zeitscheiben die Sollwerte für den anormalen Betrieb an die Aktuatoren **(150)** weitergeleitet werden, bis die technische Vorrichtung einen sicheren Zustand erreicht, der vom CEHSS, vorzugsweise in der Nachricht **(131),** dem FTDSS **(100)** mitgeteilt wird, und wobei
das *Fault-Tolerant Decision Subsystem,* FTDSS, **(100)** dazu eingerichtet ist, in jeder Zeitscheibe die an die Aktuatoren **(150)** weitergeleiteten Sollwerte in Nachrichten **(401, 402)** an das NPSS **(110)** und an das MSS **(120)** zu senden, und wobei
im Falle, dass das NPSS **(110)** und/oder das MSS **(120)** aufgrund der Überprüfung der in den Nachrichten **(401, 402)** enthaltenen Sollwerte feststellen, dass das FTDSS **(100)** die Sollwerte für den anormalen Betrieb an die Aktuatoren **(150)** weitergeleitet hat, ein Wiederanlauf des MSS **(120)** und des NPSS **(110)** ausgelöst wird,
wobei der Wiederanlauf abgeschlossen ist, sobald
- das FTDSS **(100)** auf Basis des Inhalts der Nachricht **(131)** des CEHSS (130), in welcher das CEHSS (130) mitteilt, ob sich die technische Vorrichtung in einem sicheren Zustand befindet, feststellt, dass sich die Anlage in einem sicheren Zustand befindet, und
- das FTDSS (100) vom *NPSS* **(110)** in einer Zeitscheibe einen Satz von Sollwerten für den *normalen Betrieb,* etwa in einer Nachricht **(111),** empfängt, und
- das FTDSS (100) vom MSS **(120)** in dieser Zeitscheibe, etwa mit einer Nachricht **(121),** den Korrektheitsindikator-1 mit dem Wert TRUE empfängt,
und wobei nach dem Abschluss des Wiederanlaufs das FTDSS **(100)** wieder die vom NPSS **(110)** erhaltenen Sollwerte für den normalen Betrieb an die Aktuatoren übergibt, sodass die Schritte i. - iv. wieder durchgeführt werden können bzw. durchgeführt werden,
und wobei der Wiederanlauf der beiden Datenverarbeitungssubsysteme, nämlich des NPSS **(110)** und des MSS **(120),** jeweils die folgenden Schritte umfasst:
a) Reset der Hardware des Datenverarbeitungssubsystems,
b) Ausführung einer Testsoftware zur zur Feststellung der Integrität des Datenverarbeitungssubsystems,
c) Neuinitialisierung und Neustart der Software des Datenverarbeitungssubsystems,
d) Durchführung von Berechnungen mit den durch am Beginn einer Zeitscheibe durchgeführten Beobachtungen der Umgebung gewonnenen Sensordaten.

11. Echtzeitcomputersystem nach Anspruch 10, wobei das NPSS **(110)** und/oder das MSS **(120)** und/oder das CEHSS **(130)** jeweils über einen Watchdog verfügt/verfügen, wobei der Watschdog dazu eingerichtet ist, den Wiederanlauf des jeweiligen Datenverareitungssubsystems **(110, 120, 130)** auszulösen.

12. Echtzeitcomputersystem nach Anspruch 10 oder 11, **wobei** das *Fault-Tolerant Decision Subsystem,* FTDSS, **(100)** dazu eingerichtet ist, weiters in jeder Zeitscheibe den empfangenen Satz von Sollwerten für den anormalen Betrieb, vorzugsweise am Ende der Zeitscheibe, in einer Nachricht **(102)** an das *Monitor Subsystem, MSS,* **(120)** zu senden, und wobei das Monitor Subsystem, MSS, **(120)** dazu eingerichtet ist, in jeder Zeitscheibe zu überprüfen, ob der Satz von Sollwerten für den anormalen Betrieb, welchen es vom *Critical Event Handling Subsystem, CEHSS,* **(130)** über das FTDSS **(100),** insbesondere mittels Nachrichten **(131, 102),** erhält, mit dem Umweltmodell, das auf der Basis der Sensordaten des MSS vom MSS errechnet wurde, vereinbar ist und eine sichere Führung des Prozesses im anomalen Betrieb gewährleistet, und dazu eingerichtet ist, falls dies der Fall ist, einen weiteren Korrektheitsindikator, den Korrektheitsindikator-2, auf den Wert TRUE zu setzen, und falls dies nicht der Fall ist oder wenn in einer Zeitscheibe kein Satz von Sollwerten für den anormalen Betrieb vom CEHSS **(130)** empfangen wurde, den Korrektheitsindikator-2 auf den Wert FALSE zu setzen, und wobei das Monitor Subsystem, MSS, **(120)** dazu eingerichtet ist, den Korrektheitsindikator-2 anschließend nach einem Verzögerungsintervall, das länger ist als die Wiederanlaufdauer des CEHSS(130) an das *Normal-Processing Subsystem, NPSS,* **(110)** zu sendet, und wobei das *Normal-Processing Subsystem, NPSS,* **(110)** dazu eingerichet ist, zu überprüfen, ob der vom Monitor Subsystem, MSS, erhaltene Korrektheitsindikator-2 den Wert FALSE einnimmt, und falls dies der Fall ist, die normale Führung der technischen Vorrichtung abzubrechen und die technische Vorrichtung in einen sicheren Zustand zu führen.

13. Echtzeitcomputersystem nach einem der Ansprüche 10 bis 12, **wobei** das *Normal-Processing Subsystem, NPSS,* **(110)** *in* jeder Zeitscheibe neben dem Satz von Sollwerten für den normalen Betrieb auch eine geplante Trajektorie für den *normalen Betrieb,* beispielsweise in der Nachricht **(112),** in welcher es den Satz von Sollwerten für den Normalbetrieb an das Monitor Subsystem, MSS, **(120)** sendet, übermittelt.

14. Echtzeitcomputersystem nach einem der Ansprüche 10 bis 13, **wobei** der Zeitserver fehlertolerant ist.

15. Echtzeitcomputersystem nach einem der Ansprüche 10 bis 14, **wobei** die Datenverarbeitungssubsysteme **(110, 120, 130)** *unsichere* Subsysteme sind, d.h. sie enthalten *komplexe Software,* die auf nicht fehlertoleranter Hardware ausgeführt wird.

16. Echtzeitcomputersystem nach einem der Ansprüche 10 bis 15, **wobei** die Datenverarbeitungssubsysteme **(110, 120, 130)** eine diversitäre Software enthalten, beispielsweise um die Sollwerte für die Aktuatoren **(150)** und/oder ein Umweltmodell zu berechnen.

17. Echtzeitcomputersystem nach einem der Ansprüche 10 bis 16, **wobei** jedes der Datenverarbeitungssubsysteme **(110, 120, 130)** über einen eigenen Satz von Sensoren verfügt.

18. Echtzeitcomputersystem nach einem der Ansprüche 10 bis 17, **wobei** jedes der Subsysteme **(100, 110, 120, 130, 210)** über eine eigene Energieversorgung verfügt.

## Claims

1. Method for controlling a technical equipment, e.g. a technical apparatus, such as a robot or a vehicle, in particular a motor vehicle, with a distributed real-time computer system, the real-time computer system comprising
subsystems, in particular a plurality of subsystems, wherein, for example, the subsystems are arranged hierarchically,
and wherein the subsystems are synchronized via a global time, for example by being provided a time server (210) which preferably is outside the hierarchy of the subsystems, the time server (210) periodically sending synchronization messages (211) to each subsystem, for example to the clocks of each subsystem, for synchronizing the subsystems or the clocks of the subsystems to establish the global time, and wherein
using this global time, the time axis is divided into a sequence of synchronized time slices, **characterized in that**
each subsystem (100, 110, 120, 130) and, if present, the time server (210), forms a respective separate fault containment unit, and wherein
one of the subsystems is a decision subsystem, the so-called fault-tolerant decision subsystem, FTDSS, (100), which is placed preferably at the highest level of the hierarchy, the FTDSS (100) being able to deliver target values to actuators (150) by means of messages (101) in each time slice, wherein the fault-tolerant decision subsystem, FTDSS, (100) is a safe subsystem, i.e. contains simple software executed on fault-tolerant hardware, and wherein
at least or exactly three data processing subsystems, a Normal Processing Subsystem, NPSS, (110), a Monitor Subsystem, MSS, (120), and a Critical Event Handling Subsystem, CEHSS, (130), are provided, which are placed preferably at the next lower hierarchy level, said at least or exactly three data processing subsystems using sensors (160) to acquire sensor data of an environment observed with the sensors (160) and evaluating said sensor data independently of each other, wherein
the environment is, in a time slice respectively at the beginning thereof, observed by the data processing subsystems (110, 120, 130) and, during said time slice, calculations are performed using the sensor data obtained by the observations of the environment as performed at the beginning of the time slice, and wherein
i. the Normal Processing Subsystem, NPSS, (110) sends, in each time slice and preferably at the end thereof, a set of target values for a normal operation in a message (111) to the Fault-Tolerant Decision Subsystem, FTDSS, (100) and in a message (112) to the Monitor Subsystem, MSS, (120), and wherein
ii. the Critical Event Handling Subsystem, CEHSS, (130) sends, in each time slice and preferably at the end thereof, a set of target values for an abnormal operation in a message (131) to the Fault-Tolerant Decision Subsystem, FTDSS, (100), and wherein in this message (131) the CEHSS (130) also informs the FTDSS (100) whether the technical equipment is in a safe state, and wherein
iii. the Fault-Tolerant Decision Subsystem, FTDSS, (100) sends, in each time slice, the received set of target values for normal operation in a message (102) to the Monitor Subsystem, MSS, (120), preferably at the end of the time slice, and wherein preferably the Fault-Tolerant Decision Subsystem, FTDSS, (100) further sends, in each time slice, the received set of target values for the abnormal operation in a message (102) to the Monitor Subsystem, MSS, (120), preferably at the end of the time slice, and wherein
iv. the Monitor Subsystem, MSS, (120), in each time slice, performs a check whether the set of target values for normal operation received from the Normal Processing Subsystem, NPSS, (110) in the message (112) is compatible with an environmental model calculated by the MSS (120) based on the sensor data (160) of the MSS (120) and ensures safe management of the technical equipment under normal conditions, and further the Monitor Subsystem, MSS, (120) performs, in each time slice, a check whether the set of target values for normal operation received from the Normal Processing Subsystem, NPSS, (110) in the message (112) is identical to the corresponding set of target values that were sent from the Normal Processing Subsystem, NPSS, (110) via the Fault-Tolerant Decision Subsystem, FTDSS, (100) to the Monitor Subsystem, MSS, (120), and
if both checks are positive, sets a correctness indicator, Correctness Indicator-1, to the value TRUE and, if one of the two checks is negative or both checks are negative, sets Correctness Indicator-1 to the value FALSE, and sends, in each time slice, Correctness Indicator-1 or the value of Correctness Indicator-1 in a message (121) to the Fault-Tolerant Decision Subsystem, FTDSS, (100), and wherein
the Fault-Tolerant Decision Subsystem, FTDSS, (100) decides in each time slice as follows: in the case that the correctness indicator-1 has the value TRUE, the set of target values for normal operation is, e.g. in messages (101), delivered to the actuators (150), in the case that the Correctness Indicator-1 has the value FALSE or a message (121) expected by the FTDSS (100) with the Correctness Indicator-1 fails to arrive, the set of target values for abnormal operation is, e.g. in messages (101), delivered to the actuators (150), in which case from this time the target values for abnormal operation are delivered to the actuators (150) in the subsequent time slices, until the technical equipment has reached a safe state, which is communicated to the FTDSS (100) by the CEHSS, preferably in the message (131), and wherein
the Fault-Tolerant Decision Subsystem, FTDSS, (100) sends, in each time slice, the target values forwarded to the actuators (150) in messages (401, 402) to the NPSS (110) and to the MSS (120), and wherein
in the event that the NPSS (110) and/or the MSS (120) determine, based on the verification of the target values contained in the messages (401, 402), that the FTDSS (100) has forwarded the target values for abnormal operation to the actuators (150), a restart of the MSS (120) and of the NPSS (110) is triggered, wherein preferably both the NPSS (110) and the MSS (120) are configured to trigger their own restart respectively,
wherein the restart is completed as soon as
- the FTDSS (100), based on the content of the message (131) from the CEHSS (130) in which the CEHSS (130) communicates whether the technical equipment is in a safe state, determines that the equipment is in a safe state, and
- the FTDSS (100) receives a set of target values for normal operation, from the NPSS (110) in a time slice, e.g. in a message (111), and
- the FTDSS (100) receives the correctness indicator-1 with the value TRUE from the MSS (120) in this time slice, e.g. with a message (121),
and wherein, after the restart is completed, the FTDSS (100) again delivers to the actuators the target values for normal operation received from the NPSS (110), thus allowing to again perform, or performing again, the steps i-iv,
and wherein the restart of the two data processing subsystems, namely the NPSS (110) and the MSS (120), each comprises the following steps:
a) resetting the hardware of the data processing subsystem,
b) execution of a test software to determine the integrity of the data processing subsystem,
c) reinitializing and restarting the data processing subsystem software,
d) performing calculations using the sensor data obtained by observations of the environment performed at the beginning of a time slice.

2. Method of claim 1, wherein a restart of the NPSS (110) is triggered by a watchdog of the NPSS (100), and/or a restart of the MSS (120) is triggered by a watchdog of the MSS (120), and/or a restart of the CEHSS (130) can be triggered by a watchdog of the CEHSS (130).

3. Method according to claim 1 or 2, wherein the Fault-Tolerant Decision Subsystem, FTDSS, (100) further sends, in each time slice, the received set of abnormal operation target values in a message (102) to the Monitor Subsystem, MSS, (120), preferably at the end of the time slice, and wherein the Monitor Subsystem, MSS, (120), in each time slice, checks whether the set of abnormal operation target values, which it receives from the Critical Event Handling Subsystem, CEHSS, (130) via the FTDSS (100), in particular by means of messages (131, 102), is compatible with the environmental model calculated by the MSS based on the sensor data of the MSS and ensures safe management of the technical equipment in abnormal operation, and if this is the case, sets a further correctness indicator, the Correctness Indicator-2, to the value TRUE, and if this is not the case or if in a time slice no set of target values for abnormal operation has been received from the CEHSS (130), sets the Correctness Indicator-2 to the value FALSE, and wherein the Monitor Subsystem, MSS, (120) sends the Correctness Indicator-2 after a delay interval, which is longer than the restart duration of the CEHSS(130), to the Normal Processing Subsystem, NPSS, (110), and wherein the Normal Processing Subsystem, NPSS, (110) checks whether the Correctness Indicator-2 received from the Monitor Subsystem, MSS, has the value FALSE and, if this is the case, aborts the normal management of the technical equipment and brings the technical equipment into a safe state.

4. Method according to any one of claims 1 to 3, wherein the Normal Processing Subsystem, NPSS, (110) transmits, in each time slice, and in addition to the set of target values for normal operation, also a scheduled trajectory for normal operation, for example in the message (112) in which it sends the set of target values for normal operation to the Monitor Subsystem, MSS, (120).

5. Method according to any one of claims 1 to 4, wherein the time server is fault tolerant.

6. Method according to any one of claims 1 to 5, wherein the data processing subsystems (110, 120, 130) are insecure subsystems, that is, they contain complex software that is executed using non-fault-tolerant hardware.

7. Method according to any one of claims 1 to 6, wherein the data processing subsystems (110, 120, 130) include diversitary software, for example for calculating the target values for the actuators (150) and/or an environmental model.

8. Method of any one of claims 1 to 7, wherein each of the data processing subsystems (110, 120, 130) is provided with its own set of sensors or each data processing subsystem (110, 120, 130) has access to each of the sensors.

9. Method of any one of claims 1 to 8, wherein each of the subsystems (100, 110, 120, 130, 210) has its own power supply.

10. Distributed real-time computer system for controlling a technical equipment, for example a technical installation, such as a robot or a vehicle, in particular a motor vehicle, the real-time computer system comprising
subsystems, in particular a plurality of subsystems, wherein, for example, the subsystems are arranged hierarchically,
and wherein the subsystems are synchronized via a global time, for example by being provided a time server (210) which is preferably outside the hierarchy of the subsystems, the time server (210) being configured to periodically send synchronization messages (211) to each subsystem, for example to the clocks of each subsystem, for synchronizing the subsystems or the clocks of the subsystems to establish the global time, and wherein
using this global time, the time axis is divided into a sequence of synchronized time slices, **characterized in that**
each subsystem (100, 110, 120, 130) and, if present, the time server (210), forms a respective separate fault containment unit, and wherein
one of the subsystems is a decision subsystem, the so-called fault-tolerant decision subsystem, FTDSS, (100), which is placed preferably at the highest level of the hierarchy, the FTDSS (100) being configured to deliver target values to actuators (150) by means of messages (101) in each time slice, wherein the fault-tolerant decision subsystem, FTDSS, (100) is a safe subsystem, i.e. contains simple software executed on fault-tolerant hardware, and wherein
at least or exactly three data processing subsystems, a Normal Processing Subsystem, NPSS, (110), a Monitor Subsystem, MSS, (120), and a Critical Event Handling Subsystem, CEHSS, (130), are provided, which are placed preferably at the next lower hierarchy level, said at least or exactly three data processing subsystems being configured to use sensors (160) to acquire sensor data of an environment observed with the sensors (160) and to evaluate said sensor data independently of each other, wherein
the environment is, in a time slice respectively at the beginning thereof, observed by the data processing subsystems (110, 120, 130) and, during said time slice, calculations are performed using the sensor data obtained by the observations of the environment performed at the beginning of the time slice, and wherein
i. the Normal Processing Subsystem, NPSS, (110) is configured to send, in each time slice and preferably at the end thereof, a set of target values for a normal operation in a message (111) to the Fault-Tolerant Decision Subsystem, FTDSS, (100) and in a message (112) to the Monitor Subsystem, MSS, (120), and wherein
ii. the Critical Event Handling Subsystem, CEHSS, (130) is configured to send, in each time slice and preferably at the end thereof, a set of target values for abnormal operation in a message (131) to the Fault-Tolerant Decision Subsystem, FTDSS, (100), and the CEHSS (130) is configured to inform the FTDSS (100), preferably in this message (131), whether the technical equipment is in a safe state, and wherein
iii. the Fault-Tolerant Decision Subsystem, FTDSS, (100) is configured to send, in each time slice, the received set of target values for normal operation in a message (102) to the Monitor Subsystem, MSS, (120), and wherein preferably the Fault-Tolerant Decision Subsystem, FTDSS, (100) is configured further to send, in each time slice, the received set of target values for abnormal operation in a message (102) to the Monitor Subsystem, MSS, (120), preferably at the end of the time slice, and wherein
iv. the Monitor Subsystem, MSS, (120) is configured to perform, in each time slice, a check whether the set of target values for normal operation received from the Normal Processing Subsystem, NPSS, (110) in the message (112) is compatible with an environmental model calculated by the MSS (120) based on the sensor data (160) of the MSS (120) and ensures safe management of the technical equipment under normal conditions, and further the Monitor Subsystem, MSS, (120) is configured to perform, in each time slice, a check whether the set of target values for normal operation received from the Normal Processing Subsystem, NPSS, (110) in the message (112) is identical to the corresponding set of target values that were sent from the Normal Processing Subsystem, NPSS, (110) via the Fault-Tolerant Decision Subsystem, FTDSS, (100) to the Monitor Subsystem, MSS, (120), and
to set, if both checks are positive, a correctness indicator, Correctness Indicator-1, to the value TRUE and, if one of the two checks is negative or both checks are negative, set Correctness Indicator-1 to the value FALSE and send, in each time slice, Correctness Indicator-1 or the value of Correctness Indicator-1 in a message (121) to the Fault-Tolerant Decision Subsystem, FTDSS, (100), and wherein
the Fault-Tolerant Decision Subsystem, FTDSS, (100) decides in each time slice as follows: in the case that the correctness indicator-1 has the value TRUE, the set of target values for normal operation, e.g. in messages (101), is delivered to the actuators (150), in the case that the Correctness Indicator-1 has the value FALSE or a message (121) expected by the FTDSS (100) with the Correctness Indicator-1 fails to arrive, the set of target values for abnormal operation is, e.g. in messages (101), delivered to the actuators (150), in which case from this time the target values for abnormal operation are forwarded to the actuators (150) in the subsequent time slices, until the technical equipment reaches a safe state, which is communicated to the FTDSS (100) by the CEHSS, preferably in the message (131), and wherein
the Fault-Tolerant Decision Subsystem, FTDSS, (100) is configured to send, in each time slice, the target values forwarded to the actuators (150) in messages (401, 402) to the NPSS (110) and to the MSS (120), and wherein
in the event that the NPSS (110) and/or the MSS (120) determine, based on the verification of the target values contained in the messages (401, 402), that the FTDSS (100) has forwarded the target values for abnormal operation to the actuators (150), a restart of the MSS (120) and the NPSS (110) is triggered,
wherein the restart is completed as soon as
- the FTDSS (100), based on the content of the message (131) from the CEHSS (130) in which the CEHSS (130) communicates whether the technical equipment is in a safe state, determines that the equipment is in a safe state, and
- the FTDSS (100) receives a set of target values for normal operation, from the NPSS (110) in a time slice, e.g. in a message (111), and
- the FTDSS (100) receives the correctness indicator-1 with the value TRUE from the MSS (120) in this time slice, e.g. with a message (121),
and wherein, after the restart is completed, the FTDSS (100) again delivers to the actuators the target values for normal operation received from the NPSS (110), thus allowing to again perform, or performing again, the steps i-iv,
and wherein the restart of the two data processing subsystems, namely the NPSS (110) and the MSS (120), each comprises the following steps:
a) resetting the hardware of the data processing subsystem,
b) execution of a test software to determine the integrity of the data processing subsystem,
c) reinitializing and restarting the data processing subsystem software,
d) performing calculations using the sensor data obtained by observations of the environment performed at the beginning of a time slice.

11. Real-time computer system according to claim 10, wherein the NPSS (110) and/or the MSS (120) and/or the CEHSS (130) have a respective watchdog, the watchdog being configured to trigger the restart of the respective data processing subsystem (110, 120, 130).

12. Real-time computer system according to claim 10 or 11, wherein the Fault-Tolerant Decision Subsystem, FTDSS, (100) is configured to further send, in each time slice, the received set of target values for the abnormal operation, preferably at the end of the time slice, in a message (102) to the Monitor Subsystem, MSS, (120), and wherein the Monitor Subsystem, MSS, (120) is configured to check, in each time slice, whether the set of target values for abnormal operation which it receives from the Critical Event Handling Subsystem, CEHSS, (130) via the FTDSS (100), in particular by means of messages (131, 102), is compatible with the environmental model calculated by the MSS based on the sensor data of the MSS and ensures safe management of the process in abnormal operation, and is configured to send, if this is the case, a further correctness indicator, the Correctness Indicator-2, to the value TRUE, and if this is not the case or if in a time slice no set of target values for the abnormal operation has been received from the CEHSS (130), to set the Correctness Indicator-2 to the value FALSE, and wherein the Monitor Subsystem, MSS, (120) is configured to set the Correctness Indicator-2 subsequently after a delay interval, (130) to the Normal Processing Subsystem, NPSS, (110), and wherein the Normal Processing Subsystem, NPSS, (110) is configured to check whether the Correctness Indicator-2 received from the Monitor Subsystem, MSS, has the value FALSE and, if this is the case, to abort the normal management of the technical equipment and bring the technical equipment into a safe state.

13. Real-time computer system according to any one of claims 10 to 12, wherein the Normal Processing Subsystem, NPSS, (110) transmits, in each time slice, and in addition to the set of target values for normal operation, also a scheduled trajectory for normal operation, for example in the message (112) in which it sends the set of target values for normal operation to the Monitor Subsystem, MSS, (120).

14. Real-time computer system according to any one of claims 10 to 13, wherein the time server is fault tolerant.

15. Real-time computer system according to any one of claims 10 to 14, wherein the data processing subsystems (110, 120, 130) are insecure subsystems, that is, they include complex software that is executed using non-fault-tolerant hardware.

16. Real-time computer system according to any one of claims 10 to 15, wherein the data processing subsystems (110, 120, 130) include diversitary software, for example for calculating the target values for the actuators (150) and/or an environmental model.

17. Real-time computer system according to any one of claims 10 to 16, wherein each of the data processing subsystems (110, 120, 130) is provided with its own set of sensors.

18. Real-time computer system according to any one of claims 10 to 17, wherein each of the subsystems (100, 110, 120, 130, 210) has its own power supply.

## Revendications

1. Procédé de commande d'un dispositif technique, par exemple une installation technique, telle qu'un robot ou un véhicule, en particulier un véhicule à moteur, avec un système informatique en temps réel réparti, le système informatique en temps réel comportant
des sous-systèmes, en particulier une pluralité de sous-systèmes, les sous-systèmes étant par exemple disposés de manière hiérarchique,
et les sous-systèmes étant synchronisés par l'intermédiaire d'un temps global, par exemple en ce qu'il existe un serveur de temps (210) qui se trouve de préférence en dehors de la hiérarchie des sous-systèmes, le serveur de temps (210) envoyant périodiquement des messages de synchronisation (211) à chaque sous-système, par exemple aux horloges de chaque sous-système, pour synchroniser les sous-systèmes ou les horloges des sous-systèmes pour établir le temps global, et
en utilisant ce temps global, l'axe temporel étant divisé en une séquence de tranches de temps synchronisées,
**caractérisé en ce que**
chaque sous-système (100, 110, 120, 130) et, s'il est présent le serveur de temps (210), forme une unité respective de confinement de paresse propre, et
l'un des sous-systèmes est un sous-système de décision, dit sous-système de décision tolérant aux fautes, FTDSS, (100), qui est placé de préférence au niveau le plus élevé de la hiérarchie, le FTDSS (100) pouvant transmettre des valeurs de consigne à des actionneurs (150) au moyen de messages (101) à chaque tranche de temps, le sous-système de décision tolérant aux fautes, FTDSS, (100) étant un sous-système sûr, c'est-à-dire contenant un logiciel simple qui est exécuté sur un matériel tolérant aux fautes, et
au moins trois ou exactement trois sous-systèmes de traitement de données, un sous-système de traitement normal, NPSS, (110), un sous-système de surveillance, MSS, (120) et un sous-système de gestion d'événements critiques, CEHSS, (130), sont prévus, lesquels sont placés de préférence au niveau hiérarchique immédiatement inférieur, ces au moins ou exactement trois sous-systèmes de traitement de données saisissant avec des capteurs (160) des données de capteur d'un environnement qui est observé avec les capteurs (160) et évaluant ces données de capteur indépendamment les unes des autres,
l'environnement étant observé par les sous-systèmes de traitement de données (110, 120, 130) au début respectivement d'une tranche de temps et, pendant cette tranche de temps, des calculs sont effectués avec les données de capteur obtenues par les observations de l'environnement effectuées au début de la tranche de temps, et dont
i. le sous-système de traitement normal, NPSS, (110) envoie à chaque tranche de temps, de préférence à la fin de la tranche de temps, un ensemble de valeurs de consigne pour un fonctionnement normal dans un message (111) au sous-système de décision tolérant aux fautes, FTDSS, (100) et dans un message (112) au sous-système de surveillance, MSS, (120), et
ii. le sous-système de gestion des événements critiques, CEHSS, (130) envoie à chaque tranche de temps, de préférence à la fin de la tranche de temps, un ensemble de valeurs de consigne pour un fonctionnement anormal dans un message (131) au sous-système de décision tolérant aux fautes, FTDSS, (100), le CEHSS (130) indiquant aussi dans ce message (131) au FTDSS (100) si le dispositif technique est dans un état sûr, et
iii. le sous-système de décision tolérant aux fautes, FTDSS, (100) envoie, à chaque tranche de temps, l'ensemble reçu de valeurs de consigne pour le fonctionnement normal, de préférence à la fin de la tranche de temps, dans un message (102) au sous-système de surveillance, MSS, (120), et, de préférence, le sous-système de décision tolérant aux fautes, FTDSS, (100) envoie en outre, à chaque tranche de temps, l'ensemble reçu de valeurs de consigne pour le fonctionnement anormal, de préférence à la fin de la tranche de temps, dans un message (102) au sous-système de surveillance, MSS, (120), et
iv. le sous-système de surveillance, MSS, (120) effectue, à chaque tranche de temps, une vérification pour déterminer si l'ensemble de valeurs de consigne pour le fonctionnement normal, qu'il a reçu du sous-système de traitement normal, NPSS, (110) dans le message (112), est compatible avec un modèle d'environnement calculé par le MSS (120) sur la base des données de capteur (160) du MSS (120) et garantit un conduite sûr du dispositif technique dans des conditions normales et, en outre, le sous-système de surveillance, MSS, (120) effectue une vérification à chaque tranche de temps pour déterminer si l'ensemble de valeurs de consigne pour le fonctionnement normal qu'il a reçu dans le message (112) du sous-système de traitement normal, NPSS, (110) est identique à l'ensemble correspondant de valeurs de consigne envoyé par le sous-système de traitement normal, NPSS, (110) au sous-système de surveillance, MSS, (120) par l'intermédiaire du sous-système de décision tolérant aux fautes, FTDSS, (100), et
si les deux vérifications sont positives, met un indicateur de correction, dit Indicateur de Correction-1, à la valeur VRAI et, si l'une des deux vérifications est négative ou si les deux vérifications sont négatives, met l'indicateur de Correction-1 à la valeur FAUX et transmet l'indicateur de Correction-1 ou la valeur de l'indicateur de Correction-1 à chaque tranche de temps dans un message (121) au sous-système de décision tolérant à la faute, FTDSS, (100), et
le sous-système décisionnel tolérant aux fautes, FTDSS, (100) décidant, à chaque tranche de temps, comme suit : dans le cas où l'indicateur de Correction-1 a la valeur VRAI, l'ensemble de valeurs de consigne pour le fonctionnement normal, par exemple dans des messages (101), est transmis aux actionneurs (150), dans le cas où l'indicateur de Correction-1 a la valeur FAUX ou un message (121) attendu par le FTDSS (100) avec l'indicateur de Correction-1 est absent, l'ensemble des valeurs de consigne pour le fonctionnement anormal est transmis, par exemple dans des messages (101), aux actionneurs (150), auquel cas, à partir de ce moment, dans les tranches de temps suivantes, les valeurs de consigne pour le fonctionnement anormal sont transmises aux actionneurs (150),
jusqu'à ce que le dispositif technique ait atteint un état sûr, qui est communiqué par le CEHSS, de préférence dans le message (131), au FTDSS (100), et
le sous-système de décision tolérant aux fautes, FTDSS, (100) envoie, à chaque tranche de temps, les valeurs de consigne transmises aux actionneurs (150) dans des messages (401, 402) au NPSS (110) et au MSS (120), et
dans le cas où le NPSS (110) et/ou le MSS (120) déterminent, sur la base de la vérification des valeurs de consigne contenues dans les messages (401, 402), que le FTDSS (100) a transmis les valeurs de consigne pour le fonctionnement anormal aux actionneurs (150), un redémarrage du MSS (120) et du NPSS (110) est déclenché, de préférence le NPSS (110) et le MSS (120) étant tous deux conçus pour déclencher chacun leur propre redémarrage,
le redémarrage étant terminé dès que
- le FTDSS (100), sur la base du contenu du message (131) du CEHSS (130) dans lequel le CEHSS (130) indique si le dispositif technique est dans un état sûr, détermine que l'installation est dans un état sûr et
- le FTDSS (100) reçoit du NPSS (110), dans une tranche de temps, un ensemble de valeurs de consigne pour le fonctionnement normal, par exemple dans un message (111), et
- le FTDSS (100) reçoit du MSS (120), dans cette tranche de temps, par exemple dans un message (121), l'indicateur de Correction-1 ayant la valeur VRAI,
et, une fois le redémarrage terminé, le FTDSS (100) transmet à nouveau aux actionneurs les valeurs de consigne reçues du NPSS (110) pour le fonctionnement normal, de sorte que les étapes i-iv peuvent être exécutées ou sont exécutées à nouveau,
et le redémarrage des deux sous-systèmes de traitement de données, à savoir le NPSS (110) et le MSS (120), comportant respectivement les étapes suivantes :
a) réinitialisation du matériel du sous-système de traitement des données,
b) exécution d'un logiciel de test pour déterminer l'intégrité du sous-système de traitement des données,
c) réinitialisation et redémarrage du logiciel du sous-système de traitement des données,
d) exécution des calculs avec les données de capteurs obtenues par des observations de l'environnement effectuées au début d'une tranche de temps.

2. Procédé selon la revendication 1, dans lequel un redémarrage du NPSS (110) est déclenché par un watchdog du NPSS (100), et/ou un redémarrage du MSS (120) est déclenché par un watchdog du MSS (120), et/ou un redémarrage du CEHSS (130) peut être déclenché par un watchdog du CEHSS (130).

3. Procédé selon la revendication 1 ou 2, dans lequel le sous-système de décision tolérant aux fautes, FTDSS, (100) envoie en outre, à chaque tranche de temps, l'ensemble reçu de valeurs de consigne pour le fonctionnement anormal, de préférence à la fin de la tranche de temps, dans un message (102) au sous-système de surveillance, MSS, (120), et le sous-système de surveillance, MSS, (120) vérifiant, à chaque tranche de temps, si l'ensemble de valeurs de consigne pour le fonctionnement anormal, qu'il reçoit du sous-système de gestion des événements critiques, CEHSS, (130) par l'intermédiaire du FTDSS (100), notamment au moyen de messages (131, 102), est compatible avec le modèle d'environnement calculé par le MSS sur la base des données de capteur du MSS et garantit une conduite sûre du dispositif technique en fonctionnement anormal, et si c'est le cas, met un autre indicateur de correction, dit Indicateur de Correction-2, à la valeur VRAI, et si ce n'est pas le cas ou aucun ensemble de valeurs de consigne pour le fonctionnement anormal n'a été reçu du CEHSS (130) dans une tranche de temps, l'indicateur de Correction-2 est mis à la valeur FAUX, et le sous-système de surveillance, MSS, (120) transmet l'indicateur de Correction-2 après un intervalle de retard, qui est plus long que la durée de redémarrage du CEHSS(130), au sous-système de traitement normal, NPSS, (110), et le sous-système de traitement normal, NPSS, (110) vérifiant si l'indicateur de Correction-2 reçu du sous-système de surveillance, MSS, a la valeur FAUX, et si c'est le cas, interrompt la conduite normal du dispositif technique et guide le dispositif technique vers un état sûr.

4. Procédé selon l'une quelconque des revendications 1 à 3, dans lequel le sous-système de traitement normal, NPSS, (110) transmet à chaque tranche horaire, outre l'ensemble de consignes de fonctionnement normal, une trajectoire planifiée de fonctionnement normal, par exemple dans le message (112) dans lequel il envoie l'ensemble de consignes de fonctionnement normal au sous-système de surveillance, MSS, (120).

5. Procédé selon l'une quelconque des revendications 1 à 4, dans lequel le serveur de temps est tolérant aux fautes.

6. Procédé selon l'une quelconque des revendications 1 à 5, dans lequel les sous-systèmes de traitement de données (110, 120, 130) sont des sous-systèmes non sécurisés, c'est-à-dire qu'ils contiennent des logiciels complexes exécutés sur du matériel non tolérant aux fautes.

7. Procédé selon l'une quelconque des revendications 1 à 6, dans lequel les sous-systèmes de traitement de données (110, 120, 130) comprennent un logiciel diversitaire, par exemple pour calculer les valeurs de consigne pour les actionneurs (150) et/ou un modèle environnemental.

8. Procédé selon l'une quelconque des revendications 1 à 7, dans lequel chacun des sous-systèmes de traitement de données (110, 120, 130) dispose de son propre ensemble de capteurs ou chaque sous-système de traitement de données (110, 120, 130) a accès à chacun des capteurs.

9. Procédé selon l'une quelconque des revendications 1 à 8, dans lequel chacun des sous-systèmes (100, 110, 120, 130, 210) dispose de sa propre alimentation en énergie.

10. Système informatique temps réel réparti, pour la commande d'un dispositif technique, par exemple une installation technique, telle qu'un robot ou un véhicule, en particulier un véhicule automobile, le système informatique temps réel comportant
des sous-systèmes, en particulier une pluralité de sous-systèmes, les sous-systèmes étant par exemple disposés de manière hiérarchique,
et les sous-systèmes étant synchronisés par l'intermédiaire d'un temps global, par exemple en ce qu'il existe un serveur de temps (210) qui se trouve de préférence en dehors de la hiérarchie des sous-systèmes, le serveur de temps (210) étant conçu pour envoyer périodiquement des messages de synchronisation (211) à chaque sous-système, par exemple aux horloges de chaque sous-système, pour synchroniser les sous-systèmes ou les horloges des sous-systèmes pour établir le temps global, et
en utilisant ce temps global, l'axe temporel étant divisé en une séquence de tranches de temps synchronisées,
**caractérisé en ce que**
chaque sous-système (100, 110, 120, 130) et, s'il est présent le serveur de temps (210), forme une unité respective de confinement de paresse propre, et
l'un des sous-systèmes est un sous-système de décision, dit sous-système de décision tolérant aux fautes, FTDSS, (100), qui est placé de préférence au niveau le plus élevé de la hiérarchie, le FTDSS (100) étant conçu pour transmettre des valeurs de consigne à des actionneurs (150) au moyen de messages (101) à chaque tranche de temps, le sous-système de décision tolérant aux fautes, FTDSS, (100) étant un sous-système sûr, c'est-à-dire contenant un logiciel simple qui est exécuté sur un matériel tolérant aux fautes, et
au moins trois ou exactement trois sous-systèmes de traitement de données, un sous-système de traitement normal, NPSS, (110), un sous-système de surveillance, MSS, (120) et un sous-système de gestion des événements critiques, CEHSS, (130), sont prévus, lesquels sont placés de préférence au niveau hiérarchique immédiatement inférieur, ces au moins ou exactement trois sous-systèmes de traitement de données étant conçus pour saisir avec des capteurs (160) des données de capteur d'un environnement qui est observé avec les capteurs (160) et pour évaluer ces données de capteur indépendamment les unes des autres,
l'environnement étant observé par les sous-systèmes de traitement de données (110, 120, 130) au début respectivement d'une tranche de temps et, pendant cette tranche de temps, des calculs sont effectués avec les données de capteur obtenues par les observations de l'environnement effectuées au début de la tranche de temps, et dont
i. le sous-système de traitement normal, NPSS, (110) est conçu pour envoyer, à chaque tranche de temps, de préférence à la fin de la tranche de temps, un ensemble de valeurs de consigne pour un fonctionnement normal dans un message (111) au sous-système de décision tolérant aux fautes, FTDSS, (100) et dans un message (112) au sous-système de surveillance, MSS, (120), et
ii. le sous-système de gestion des événements critiques, CEHSS, (130) est conçu pour envoyer, à chaque tranche de temps, de préférence à la fin de la tranche de temps, un ensemble de valeurs de consigne pour un fonctionnement anormal dans un message (131) au sous-système de décision tolérant aux fautes, FTDSS, (100), le CEHSS (130) étant conçu pour indiquer, de préférence dans ce message (131), au FTDSS (100) si le dispositif technique est dans un état sûr, et
iii. le sous-système de décision tolérant aux fautes, FTDSS, (100) est conçu pour envoyer l'ensemble reçu de valeurs de consigne pour le fonctionnement normal à chaque tranche de temps dans un message (102) au sous-système de surveillance, MSS, (120), et, de préférence, le sous-système de décision tolérant aux fautes, FTDSS, (100) est conçu pour envoyer en outre, à chaque tranche de temps, l'ensemble reçu de valeurs de consigne pour le fonctionnement anormal, de préférence à la fin de la tranche de temps, dans un message (102) au sous-système de surveillance, MSS, (120), et
iv. le sous-système de surveillance, MSS, (120) est conçu pour effectuer, à chaque tranche de temps, une vérification pour déterminer si l'ensemble de valeurs de consigne pour le fonctionnement normal qu'il a reçu du sous-système de traitement normal, NPSS, (110) dans le message (112) est compatible avec un modèle d'environnement calculé par le MSS (120) sur la base des données de capteur (160) du MSS (120) et garantit une conduite sûre du dispositif technique dans des conditions normales et, en outre, le sous-système de surveillance, MSS, (120) est conçu pour effectuer une vérification à chaque tranche de temps pour déterminer si l'ensemble de valeurs de consigne pour le fonctionnement normal qu'il a reçu dans le message (112) du sous-système de traitement normal, NPSS, (110) est identique à l'ensemble correspondant de valeurs de consigne envoyées par le sous-système de traitement normal, NPSS, (110) au sous-système de surveillance, MSS, (120) par l'intermédiaire du sous-système de décision tolérant la faute, FTDSS, (100), et
si les deux vérifications sont positives, mettre un indicateur de correction, dit Indicateur de Correction-1, à la valeur VRAI et, si l'une des deux vérifications est négative ou si les deux vérifications sont négatives, mettre l'indicateur de Correction-1 à la valeur FAUX et envoyer l'indicateur de Correction-1 ou la valeur de l'indicateur de Correction-1 à chaque tranche de temps dans un message (121) au sous-système de décision tolérant à la faute, FTDSS, (100), et
le sous-système de décision tolérant la faute, FTDSS, (100) décidant à chaque tranche de temps comme suit : dans le cas où l'indicateur de Correction-1 a la valeur VRAI, l'ensemble de valeurs de consigne pour le fonctionnement normal, par exemple dans des messages (101), est transmis aux actionneurs (150), dans le cas où l'indicateur de Correction-1 a la valeur FAUX ou un message (121) attendu par le FTDSS (100) avec l'indicateur de Correction-1 est absent, l'ensemble de valeurs de consigne pour le fonctionnement anormal est transmis, par exemple dans des messages (101), aux actionneurs (150), auquel cas, à partir de ce moment, dans les tranches de temps suivantes les valeurs de consigne pour le fonctionnement anormal sont transmises aux actionneurs (150)
jusqu'à ce que le dispositif technique atteigne un état sûr, qui est communiqué par le CEHSS, de préférence dans le message (131), au FTDSS (100), et
le sous-système de décision tolérant aux fautes, FTDSS, (100) est conçu pour envoyer, à chaque tranche de temps, les valeurs de consigne transmises aux actionneurs (150) dans des messages (401, 402) au NPSS (110) et au MSS (120), et
dans le cas où le NPSS (110) et/ou le MSS (120) déterminent, sur la base de la vérification des valeurs de consigne contenues dans les messages (401, 402), que le FTDSS (100) a transmis les valeurs de consigne pour le fonctionnement anormal aux actionneurs (150), un redémarrage du MSS (120) et du NPSS (110) est déclenché,
le redémarrage étant terminé dès que
- le FTDSS (100), sur la base du contenu du message (131) du CEHSS (130) dans lequel le CEHSS (130) indique si le dispositif technique est dans un état sûr, détermine que l'installation est dans un état sûr et
- le FTDSS (100) reçoit du NPSS (110), dans une tranche de temps, un ensemble de valeurs de consigne pour le fonctionnement normal, par exemple dans un message (111), et
- le FTDSS (100) reçoit du MSS (120), dans cette tranche de temps, par exemple dans un message (121), l'indicateur de Correction-1 ayant la valeur VRAI,
et, une fois le redémarrage terminé, le FTDSS (100) transmet à nouveau aux actionneurs les valeurs de consigne reçues du NPSS (110) pour le fonctionnement normal, de sorte que les étapes i-iv peuvent être exécutées ou sont exécutées à nouveau,
et le redémarrage des deux sous-systèmes de traitement de données, à savoir le NPSS (110) et le MSS (120), comportant respectivement les étapes suivantes :
a) réinitialisation du matériel du sous-système de traitement des données,
b) exécution d'un logiciel de test pour déterminer l'intégrité du sous-système de traitement des données,
c) réinitialisation et redémarrage du logiciel du sous-système de traitement des données,
d) exécution des calculs avec les données de capteurs obtenues par des observations de l'environnement effectuées au début d'une tranche de temps.

11. Système informatique en temps réel selon la revendication 10, dans lequel le NPSS (110) et/ou le MSS (120) et/ou le CEHSS (130) dispose(nt) chacun d'un watchdog, ledit watchdog étant conçu pour déclencher le redémarrage du sous-système de traitement de données respectif (110, 120, 130).

12. Système informatique en temps réel selon la revendication 10 ou 11, dans lequel le sous-système de décision tolérant aux fautes, FTDSS, (100) est conçu pour envoyer en outre, à chaque tranche de temps, l'ensemble reçu de valeurs de consigne pour le fonctionnement anormal, de préférence à la fin de la tranche de temps, dans un message (102) au sous-système de surveillance, MSS, (120), et le sous-système de surveillance, MSS, (120) étant conçu pour vérifier, à chaque tranche de temps, si l'ensemble de valeurs de consigne pour le fonctionnement anormal, qu'il reçoit du sous-système de gestion des événements critiques, CEHSS, (130) par l'intermédiaire du FTDSS (100), notamment au moyen de messages (131, 102), est compatible avec le modèle d'environnement calculé par le MSS sur la base des données de capteur du MSS et garantit une conduite sûre du processus en fonctionnement anormal, et conçu pour mettre, si c'est le cas, un autre indicateur de correction, dit Indicateur de Correction-2, à la valeur VRAI, et si ce n'est pas le cas ou aucun ensemble de valeurs de consigne pour le fonctionnement anormal n'a été reçu du CEHSS (130) dans une tranche de temps, mettre l'indicateur de Correction-2 à la valeur FAUX, et le sous-système de surveillance, MSS, (120) est conçu pour transmettre ensuite l'indicateur de Correction-2 après un intervalle de retard, qui est plus long que la durée de redémarrage du CEHSS(130), au sous-système de traitement normal, NPSS, (110), et le sous-système de traitement normal, NPSS, (110) étant conçu pour vérifier si l'indicateur de Correction-2 reçu du sous-système de surveillance, MSS, a la valeur FAUX, et si c'est le cas, pour interrompre la conduite normal du dispositif technique et pour guider le dispositif technique vers un état sûr.

13. Système informatique temps réel selon l'une quelconque des revendications 10 à 12, dans lequel le sous-système de traitement normal, NPSS, (110) transmet à chaque tranche horaire, outre l'ensemble de consignes de fonctionnement normal, une trajectoire planifiée de fonctionnement normal, par exemple dans le message (112) dans lequel il envoie l'ensemble de consignes de fonctionnement normal au sous-système de surveillance, MSS, (120).

14. Système informatique en temps réel selon l'une quelconque des revendications 10 à 13, dans lequel le serveur de temps est tolérant aux fautes.

15. Système informatique temps réel selon l'une quelconque des revendications 10 à 14, dans lequel les sous-systèmes de traitement de données (110, 120, 130) sont des sous-systèmes non sécurisés, c'est-à-dire qu'ils contiennent des logiciels complexes exécutés sur du matériel non tolérant aux fautes.

16. Système informatique temps réel selon l'une quelconque des revendications 10 à 15, dans lequel les sous-systèmes de traitement de données (110, 120, 130) contiennent un logiciel diversitaire, par exemple pour calculer les valeurs de consigne pour les actionneurs (150) et/ou un modèle environnemental.

17. Système informatique temps réel selon l'une quelconque des revendications 10 à 16, dans lequel chacun des sous-systèmes de traitement de données (110, 120, 130) dispose de son propre ensemble de capteurs.

18. Système informatique en temps réel selon l'une quelconque des revendications 10 à 17, dans lequel chacun des sous-systèmes (100, 110, 120, 130, 210) dispose de sa propre alimentation en énergie.
